(19) Europäisches Patentamt
European Patent Office
Office européen des brevets

(11) EP 0 859 549 B1

(12) EUROPÄISCHE PATENTSCHRIFT

(45) Veröffentlichungstag und Bekanntmachung des Hinweises auf die Patenterteilung:
**16.08.2001 Patentblatt 2001/33**

(21) Anmeldenummer: **96933362.4**

(22) Anmeldetag: **23.09.1996**

(51) Int Cl.[7]: **A01N 61/00**, A01N 43/40
// (A01N61/00, 61:00, 43:40), (A01N43/40, 61:00, 37:50)

(86) Internationale Anmeldenummer:
**PCT/EP96/04151**

(87) Internationale Veröffentlichungsnummer:
**WO 97/10716 (27.03.1997 Gazette 1997/14)**

(54) **SCHADPILZBEKÄMPFUNG MIT DER KOMBINATION EINES DIE ATMUNG AM CYTOCHROM-KOMPLEX III HEMMENDEN WIRKSTOFFES MIT EINEM AMID**

HARMFUL FUNGI CONTROL WITH AN ACTIVE SUBSTANCE INHIBITING RESPIRATION BY INHIBITING THE CYTOCHROME COMPLEX III, COMBINED WITH AN AMIDE

LUTTE CONTRE LES CHAMPIGNONS NOCIFS AU MOYEN D'UNE COMBINAISON D'UNE SUBSTANCE ACTIVE INHIBANT LA RESPIRATION PAR L'INTERMEDIAIRE DU COMPLEXE DE CYTOCHROME III, ET D'UN AMIDE

(84) Benannte Vertragsstaaten:
**AT BE CH DE DK ES FI FR GB GR IE IT LI NL PT SE**

(30) Priorität: **22.09.1995 DE 19535366**

(43) Veröffentlichungstag der Anmeldung:
**26.08.1998 Patentblatt 1998/35**

(73) Patentinhaber: **BASF AKTIENGESELLSCHAFT**
**67056 Ludwigshafen (DE)**

(72) Erfinder:
- **BAYER, Herbert**
  **D-68159 Mannheim (DE)**
- **SAUTER, Hubert**
  **D-68167 Mannheim (DE)**
- **KÖHLE, Harald**
  **D-67273 Bobenheim (DE)**
- **RETZLAFF, Günter**
  **D-67354 Römerberg (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **EICKEN, Karl**
  **D-67157 Wachenheim (DE)**

(74) Vertreter: **Kinzebach, Werner, Dr. et al**
**Patent Attorneys,**
**Reitstötter, Kinzebach & Partner,**
**Sternwartstrasse 4**
**81679 München (DE)**

(56) Entgegenhaltungen:
**EP-A- 0 253 213**
**EP-A- 0 254 426**
**EP-A- 0 382 375**
**EP-A- 0 394 631**
**EP-A- 0 648 416**
**WO-A-95/15083**
**WO-A-96/03047**

- **RESEARCH DISCLOSURE, Nr. 338, 1.Juni 1992, Seiten 506-510, XP000315713 "MIXTURES OF FUNGICIDES AND INSECTICIDES"**
- **CHEMICAL ABSTRACTS, vol. 124, no. 21, 20.Mai 1996 Columbus, Ohio, US; abstract no. 281986, XP002025269 & JP 08 026 911 A (SUMITOMO CHEMICAL) 30.Januar 1996**
- **DATABASE WPI Section Ch, Week 9608 Derwent Publications Ltd., London, GB; Class C03, AN 96-074693 XP002025271 & JP 07 330 516 A (SUMITOMO CHEM CO LTD) , 19.Dezember 1995**
- **G.HAUG ET AL.: "Chemistry of Plant Protection" 1990 , SPRINGER-VERLAG , BERLIN, DE XP002025268 siehe Seite 241 - Seite 247**
- **DATABASE WPI Section Ch, Week 9531 Derwent Publications Ltd., London, GB; Class C02, AN 95-237114 XP002025272 & JP 07 145 012 A (NIPPON BAYER AGROCHEM KK) , 6.Juni 1995**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 859 549 B1

- **CHEMICAL ABSTRACTS, vol. 124, no. 3, 15.Januar 1996 Columbus, Ohio, US; abstract no. 23916w, Seite 369; Spalte 1; XP002025270 & BR 9 404 349 A (SUMITOMO CHEMICAL) 4.Juni 1995**

## Beschreibung

Die vorliegende Erfindung betrifft Mittel zur Bekämpfung von Schadpilzen sowie Verfahren zur Bekämpfung von Schadpilzen unter Anwendung derartiger Mittel.

Es ist aus der Literatur bekannt, daß Wirkstoffe, die den Cytochrom $bc_1$ Komplex (Cytochrom Komplex III) hemmen, als Fungizide eingesetzt werden können [vgl. U. Brandt, U. Haase, H. Schägger, G. von Jagow: "Spezifität und Wirkmechanismus der Strobilurine", Dechema-Monographie Bd. 129, 27-38, VCH Verlagsgesellschaft Weinheim, 1993; J.M. Clough: Natural Product Reports, 1993, 565-574; F. Röhl, H. Sauter: Biochem. Soc. Trans. 22, 635 (1993)].

Bei der Anwendung dieser Wirkstoffe hat sich jedoch gezeigt, daß ihre Wirkung nur vorübergehend ist, d.h. bereits nach einiger Zeit war erneutes Wachstum der Pilze zu beobachten.

Die EP-A-545 099 beschreibt Anilidverbindungen der Formel

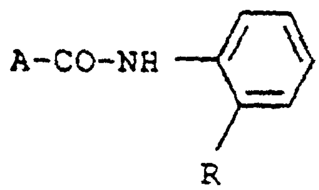

worin A für Phenyl, das in 2-Stellung durch Methyl, Trifluormethyl, Chlor, Brom oder Jod substituiert ist oder für bestimmte aromatische oder nicht-aromatische heterocyclische Reste, die gegebenenfalls durch Methyl, Chlor oder Trifluormethyl substituiert sein können, steht und R für bestimmte aliphatische oder cycloaliphatische Reste, die gegebenenfalls durch Halogen substituiert sein können, oder für Phenyl, das gegebenenfalls durch $C_1$-$C_4$-Alkyl, $C_1$-$C_4$-Alkoxy, $C_1$-$C_4$-Alkylthio oder Halogen substituiert ist, steht. Diese Verbindungen sind zur Bekämpfung von Botrytis brauchbar.

Die EP-A-589 301 beschreibt Anilidverbindungen der gleichen Formel, worin A einen cyclischen Rest der Formeln bedeutet:

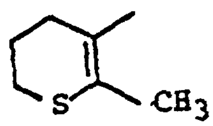

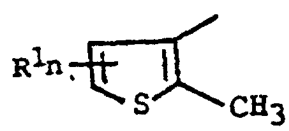

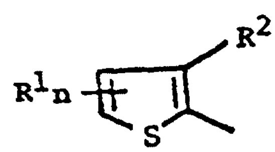

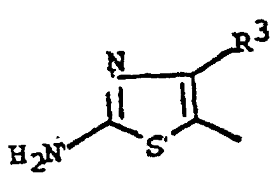

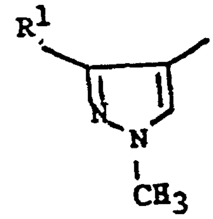

worin $R^1$ für Wasserstoff oder $C_1$-$C_4$-Alkyl steht; $R^2$ für Halogen oder $C_1$-$C_4$-Alkyl steht; $R^3$ für $C_1$-$C_4$-Alkyl oder $C_1$-$C_4$-Halogenalkyl steht; n für 1 oder 2 steht; und R im wesentlichen die oben angegebenen Bedeutungen besitzt. Diese Verbindungen sind ebenfalls zur Behandlung von Botrytis brauchbar.

Die WO 93/11117 beschreibt Verbindungen der Formel

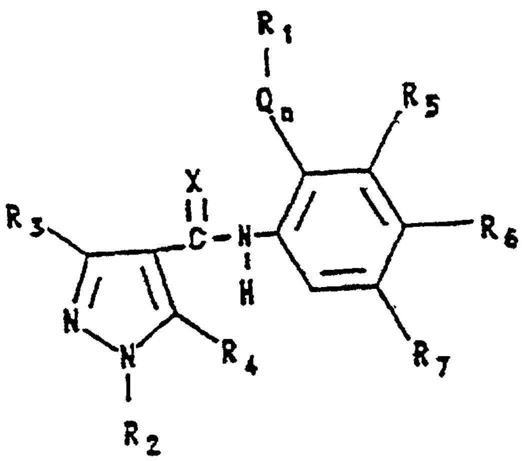

worin

Q für $C_1$-$C_3$-Alkyl, $C_2$-$C_3$-Alkenyl, $C_2$-$C_3$-Alkinyl, $-(CH_2)_mCH=$ oder$-(CH_2)_m-X-CH_2)_m$-steht;
n für 0 oder 1 steht;
jedes m unabhängig voneinander für 0, 1, 2 oder 3 steht;
jedes x unabhängig für O oder S steht;
$R^1$ für bestimmte alicyclische Reste steht;
$R^2$ für Wasserstoff, fluoriertes Methyl, Methyl, Ethyl, $C_2$-$C_6$-Alkenyl, $C_3$-$C_6$-Chloralkyl, Phenyl, Alkylthioalkyl, Alkoxyalkyl, Halogenalkylthioalkyl, Halogenalkoxyalkyl oder Hydroxyalkyl steht;
$R^3$ für Halogenmethyl, Halogenmethoxy, Methyl, Ethyl, Halogen, Cyano, Methylthio, Nitro, Aminocarbonyl oder Aminocarbonylmethyl steht;
$R^4$ für Wasserstoff, Halogen oder Methyl steht;
$R^5$, $R^6$ und $R^7$ jeweils unabhängig voneinander ausgewählt sind unter Wasserstoff, Halogen, Cyano, $C_1$-$C_6$-Alkyl, $C_2$-$C_6$-Alkenyl, $C_2$-$C_6$-Alkinyl, $C_1$-$C_4$-Alkoxy, $C_1$-$C_4$-Alkylthio, $C_3$-$C_4$-Cycloalkyl und Halogenmethoxy. Diese Verbindungen sind fungizid wirksam.

Es hat sich jedoch gezeigt, daß die oben genannten Anilidverbindungen kein ausreichend breites und befriedigendes Wirkungsspektrum besitzen.

Der vorliegenden Erfindung liegt daher die Aufgabe zugrunde, eine verbesserte Möglichkeit zur Bekämpfung von Schadpilzen und insbesondere Botrytis zur Verfügung zu stellen.

Überraschenderweise wurde nun gefunden, daß diese Aufgabe mit einem Mittel gelöst wird, welches einen Wirkstoff, der die Atmung am Cytochrom-Komplex III hemmt, in Kombination mit einer Amidverbindung der oben genannten Art enthält.

Gegenstand der vorliegenden Erfindung sind daher Mittel zur Bekämpfung von Schadpilzen, die in einem festen oder flüssigen Träger enthalten:

a) mindestens einen Wirkstoff I, der die Atmung am Cytochrom-Komplex III hemmt und

b) mindestens eine Amidverbindung der Formel II

$$A - CO - NR^1 - R^2 \qquad (II)$$

worin

A für eine Arylgruppe oder einen aromatischen oder nichtaromatischen, 5- oder 6-gliedrigen Heterocyclus, der 1 bis 3 Heteroatome aufweist, die ausgewählt sind unter O, N und S, steht;
wobei die Arylgruppe oder der Heterocyclus gegebenenfalls 1, 2 oder 3 Substituenten aufweisen kann, die unabhängig voneinander ausgewählt sind unter Alkyl, Halogen, $CHF_2$, $CF_3$, Alkoxy, Halogenalkoxy, Alkylthio, Alkylsulfinyl und Alkylsulfonyl;

$R^1$ für ein Wasserstoffatom, Alkyl oder Alkoxy steht;

$R^2$ für eine Phenyl- oder Cycloalkylgruppe steht, die gegebenenfalls 1 bis 3 Substituenten aufweist, die unabhängig voneinander ausgewählt sind unter Phenyl, Alkenyl, Alkinyl, Alkenyloxy, Alkinyloxy, Cycloalkyl, Cycloalkenyl, Cycloalkyloxy und Cycloalkenyloxy, und die zusätzlich durch 1 oder mehrere Halogenatome substituiert sein kann, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe ihrerseits 1 bis 5 Halogenatome und/- oder 1 bis 3 Substituenten aufweisen kann, die unabhängig voneinander ausgewählt sind unter Alkyl, Halogenalkyl, Alkoxy, Halogenalkoxy, Alkylthio und Halogen-alkylthio, und wobei die amidische Phenylgruppe gegebenenfalls mit einem gesättigten 5-gliedrigen Ring kondensiert ist, der gegebenenfalls durch 1 oder mehrere Alkylgruppen substituiert ist und/oder ein Heteroatom, ausgewählt unter O und S, aufweisen kann, ausgenommen die Verbindung der Formel II, worin

A für 2-Chlorpyridin-3-yl, $R^1$ für H und $R^2$ für

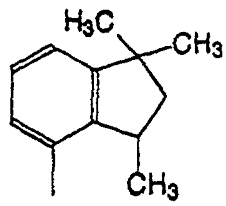

stehen.

Die erfindungsgemäßen Mittel wirken synergistisch und sind daher zur Bekämpfung von Schadpilzen und insbesondere Botrytis besonders geeignet. Es ist anzunehmen, daß dies darauf beruht, daß der Pilz bei Hemmung der Atmung am Cytochrom-Komplex III einen Nebenweg der alternativen Atmung benutzt, so daß keine völlige Abtötung der Pilze erfolgt. Das würde bedeuten, daß die Amidverbindungen der Formel II die alternative Atmung hemmen. Es ist daher anzunehmen, daß die Kombination der beiden Wirkstoffe die Atmung über den Cytochrom-Komplex III als auch die alternative Atmung hemmet, so daß die Pilze vollständig abgetötet werden.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte $C_1$-$C_{12}$-Alkyl- und insbesondere $C_1$-$C_6$-Alkylgruppen. Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethyl/-oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy, Halogenalkoxy, Alkylthio, Halogenalkylthio, Alkylsulfinyl und Alkylsulfonyl.

Die Alkenylgruppe umfaßt geradkettige und verzweigte Alkenylgruppen. Vorzugsweise handelt es sich dabei um geradkettige oder verzweigte $C_3$-$C_{12}$-Alkenylgruppen und insbesondere $C_3$-$C_6$-Alkenyl-gruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-l-methyl-2-propenyl und 1-Ethyl-2-methyl-2-propenyl, insbesondere 2-Propenyl, 2-Butenyl, 3-Methyl-2-butenyl und 3-Methyl-2-pentenyl.

Die Alkenylgruppe kann mit einem oder mehreren Halogenatomen, insbesondere Fluor und Chlor, partiell

oder vollständig halogeniert sein. Vorzugsweise weist sie 1 bis 3 Halogenatome auf.

Die Alkinylgruppe umfaßt geradkettige und verzweigte Alkinyl-gruppen. Vorzugsweise handelt es sich dabei um geradkettige und verzweigte $C_3$-$C_{12}$-Alkinylgruppen und insbesondere $C_3$-$C_6$-Alkinyl-gruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexi-nyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-1-methyl-2-propinyl.

Die obigen Ausführungen zur Alkenylgruppe und deren Halogensubstituenten sowie zur Alkinylgruppe gelten in entsprechender Weise für Alkenyloxy und Alkinyloxy.

Bei der Cycloalkylgruppe handelt es sich vorzugsweise um eine $C_3$-$C_6$-Cycloalkylgruppe, wie Cyclopropyl, Cyclobutyl, Cyclopentyl oder Cyclohexyl. Wenn die Cycloalkylgruppe substituiert ist, weist sie vorzugsweise 1 bis 3 $C_1$-$C_4$-Alkylreste als Substituenten auf.

Cycloalkenyl steht vorzugsweise für eine $C_4$-$C_6$-Cycloalkenylgruppe, wie Cyclobutenyl, Cyclopentenyl oder Cyclohexenyl. Wenn die Cycloalkenylgruppe substituiert ist, weist sie vorzugweise 1 bis 3 $C_1$-$C_4$-Alkylreste als Substituenten auf.

Bei einer Cycloalkoxygruppe handelt es sich vorzugsweise um eine $C_5$-$C_6$-Cycloalkoxygruppe, wie Cyclopentyloxy oder Cyclohexyloxy. Wenn die Cycloalkoxygruppe substituiert ist, weist sie vorzugsweise 1 bis 3 $C_1$-$C_4$-Alkylreste als Substituenten auf.

Bei der Cycloalkenyloxygruppe handelt es sich vorzugsweise um eine $C_5$-$C_6$-Cycloalkenyloxygruppe, wie Cyclopentyloxy oder Cyclohexyloxy. Wenn die Cycloalkenyloxygruppe substituiert ist, weist sie vorzugsweise 1 bis 3 $C_1$-$C_4$-Alkylreste als Substituenten auf.

Aryl steht vorzugsweise für Phenyl.

Hetaryl steht vorzugsweise für einen 5- oder 6-gliedrigen aromatischen Heterocyclus, der 1, 2 oder 3 Heteroatome aufweist, die unabhängig voneinander ausgewählt sind unter N, O und S. Insbesondere handelt es sich dabei um Pyridinyl, Pyrimidinyl, Thiazolyl, Pyrazolyl, Oxazolyl, Isoxazol, Isothiazolyl, Imidazolyl, Pyrrolyl, Furanyl, Thienyl oder Triazolyl.

Heterocyclyl steht vorzugsweise für einen 5- oder 6-gliedrigen, gesättigten oder ungesättigten Heterocyclus, der 1, 2 oder 3 Heteroatome aufweist, die unabhängig voneinander ausgewählt sind unter N, O und S. Insbesondere handelt es sich dabei um die Dihydro-, Tetrahydro- und Hexahydroderivate der unter "Hetaryl" genannten Reste. Bevorzugt sind Pyrrolidinyl, Tetrahydrofuranyl, Imidazolidinyl, Pyrazolidinyl, Oxazolidinyl, Isoxazolidinyl, Thiazolidinyl, Isothiazolidinyl, Piperidinyl oder Morpholinyl.

Wenn A in der Formel II für eine Phenylgruppe steht, so kann diese einen, zwei oder drei der oben erwähnten Substituenten in beliebiger Position aufweisen. Vorzugsweise sind diese Substituenten unabhängig voneinander ausgewählt unter Alkyl, Difluormethyl, Trifluormethyl und Halogen, insbesondere Chlor, Brom und Jod. Besonders bevorzugt weist die Phenylgruppe einen Substituenten in 2-Position auf.

Wenn A für einen 5-gliedrigen Heterocyclus steht, handelt es sich insbesondere um einen Furyl-, Thiazolyl-, Pyrazolyl-, Imidazolyl-, Oxazolyl-, Thienyl-, Triazolyl- oder Thiadiazolylrest oder um die entsprechenden Dihydro- oder Tetrahydroderivate davon. Ein Thiazolyl- oder Pyrazolylrest ist bevorzugt.

Wenn A für einen 6-gliedrigen Heterocyclus steht, handelt es sich dabei insbesondere um einen Pyridylrest oder einen Rest der Formel:

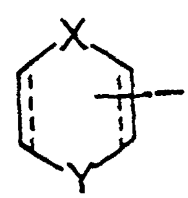

worin einer der Reste X und Y für 0, S oder $NR^9$ steht, wobei $R^9$ für H oder Alkyl steht und der andere der Reste X und Y für $CH_2$, S, SO, $SO_2$ oder $NR^9$ steht. Die gestrichelte Linie bedeutet, daß gegebenenfalls eine Doppelbindung vorhanden sein kann.

Besonders bevorzugt handelt es sich bei dem 6-gliedrigen aromatischen Heterocyclus um einen Pyridylrest, insbesondere einen 3-Pyridylrest, oder um einen Rest der Formel

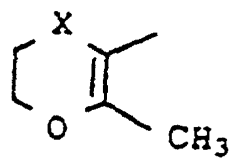

(A3)

worin X für $CH_2$, S, SO oder $SO_2$ steht.

Die erwähnten heterocyclischen Reste können gegebenenfalls 1, 2 oder 3 der oben genannten Substituenten aufweisen, wobei diese Substituenten vorzugsweise unabhängig voneinander ausgewählt sind unter Alkyl, Halogen, Difluormethyl oder Trifluormethyl.

Besonders bevorzugt steht A für einen Rest der Formeln:

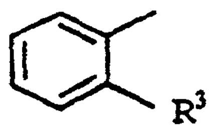

(A1)

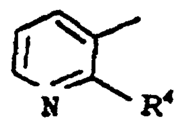

(A2)

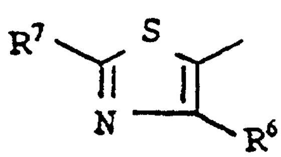

(A5)

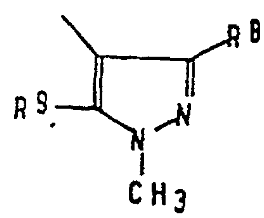

(A7)

worin $R^3$, $R^4$, $R^6$, $R^7$, $R^8$ und $R^9$ unabhängig voneinander für Wasserstoff, Alkyl, insbesondere Methyl, Halogen, insbesondere Chlor, $CHF_2$ oder $CF_3$ stehen.

Der Rest $R^1$ in der Formel II steht vorzugsweise für ein Wasserstoffatom.

Der Rest $R^2$ in der Formel II steht vorzugsweise für einen Phenylrest. Vorzugsweise weist $R^2$ mindestens einen Substituenten auf, der insbesondere bevorzugt in 2-Stellung vorhanden ist. Vorzugsweise ist der Substituent (oder sind die Substituenten) ausgewählt unter Alkyl, Cycloalkyl, Cycloalkenyl, Halogen oder Phenyl.

Die Substituenten des Restes $R^2$ können ihrerseits wieder substituiert sein. Die aliphatischen oder cycloaliphatischen Substituenten können dabei partiell oder vollständig halogeniert, insbesondere fluoriert oder chloriert, sein. Vorzugsweise weisen sie 1, 2 oder 3 Fluor- oder Chloratome auf. Wenn der Substituent des Restes $R^2$ eine Phenylgruppe ist, so kann diese vorzugsweise mit 1 bis 3 Halogenatomen, insbesondere Chloratomen, und/oder mit einem Rest substituiert sein, der vorzugsweise ausgewählt ist unter Alkyl und Alkoxy. Besonders bevorzugt ist die Phenylgruppe mit einem Halogenatom in p-Position substituiert, d.h. der besonders bevorzugte Substituent des Restes $R^2$ ist ein p-halogensub-stituierter Phenylrest. Der Rest $R^2$ kann auch mit einem gesättigten 5-gliedrigen Ring kondensiert sein, wobei dieser Ring seinerseits 1 bis 3 Alkylsubstituenten aufweisen kann. $R^2$ steht dann beispielsweise für Indanyl, Thiaindanyl und Oxaindanyl. Bevorzugt sind Indanyl und 2-Oxaindanyl, die insbesondere über die 4-Stellung an das Stickstoffatom gebunden sind.

Vorzugsweise handelt es sich bei dem Wirkstoff I um eine Verbindung der Formel IA oder IB:

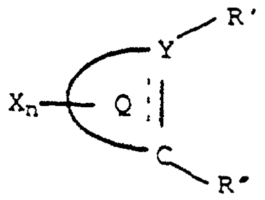

IA

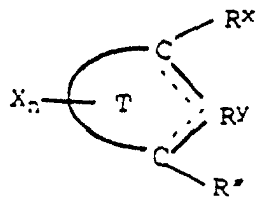

IB

in denen .... für eine Doppel- oder Einfachbindung steht;

R' für $-C[CO_2CH_3]=CHOCH_3$, $-C[CO_2CH_3]=NOCH_3$, $-C[CONHCH_3]=NOCH_3$, $-C[CO_2CH_3]=CHCH_3$, $-C[CO_2CH_3]=CHCH_2CH_3$, $-C[COCH_3]=NOCH_3$, $-C[COCH_2CH_3]=VOCH_3$, $-N(OCH_3)-CO_2CH_3$, $-N(CH_3)-CO_2CH_3$ oder $-N(CH_2CH_3)-CO_2CH_3$ steht;

R" für einen organischen Rest, welcher direkt oder über eine Oxy-, Mercapto-, Amino-, oder Alkylaminogruppe gebunden ist, steht oder
zusammen mit einer Gruppe X und dem Ring Q bzw. T, an den sie gebunden sind, ein ggf. substituiertes bicyclisches, partiell oder vollständig ungesättigtes System, welches neben Kohlenstoffringgliedern 1, 2 oder 3 Heteroatome, unabhängig ausgewählt unter Sauerstoff, Schwefel und Stickstoff, enthalten kann;

$R^x$ für $-OC[CO_2CH_3]=CHOCH_3$, $-OC[CO_2CH_3]=CHCH_3$, $-OC [CO_2CH_3]=CHCH_2CH_3$, $-SC[CO_2CH_3]=CHOCH_3$, $-SC[CO_2CH_3]=CHCH_3$, $-SC[CO_2CH_3]=CHCH_2CH_3$, $-N(CH_3)C[CO_2CH_3]=CHOCH_3$, $-N(CH_3)C[CO_2CH_3]=NOCH_3$, $-CH_2C[CO_2CH_3]=CHOCH_3$, $-CH_2C[CO_2CH_3]=NOCH_3$ oder $-CH_2C[CONHCH_3]=NOCH_3$ steht;

$R^y$ für Sauerstoff, Schwefel, =CH- oder =N- steht;

n für 0, 1, 2 oder 3 steht, wobei die Reste X gleich oder verschieden sein können, wenn n > 1 ist;

x für Cyano, Nitro, Halogen, Alkyl, Halogenalkyl, Alkoxy, Halogenalkoxy, Alkylthio steht oder
wenn n > 1 ist, eine an zwei benachbarte C-Atome des Phenylrings gebundene $C_3$-$C_5$-Alkylen-, $C_3$-$C_5$-Alkenylen-, Oxy-$C_2$-$C_4$-alkylen-, Oxy-$C_1$-$C_3$-alkylenoxy-, Oxy-$C_2$-$C_4$-alkenylen-, Oxy-$C_2$-$C_4$-alkenylenoxy- oder Butadiendiylgruppe bedeutet, wobei diese Ketten ihrerseits ein bis drei Reste tragen können, die unabhängig voneinander ausgewählt sind unter Halogen, Alkyl, Halogenalkyl, Alkoxy, Halogenalkoxy und Alkylthio;

Y für =C- oder -N- steht;

Q für Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl oder Triazinyl steht; und

T für Phenyl, Oxazolyl, Thiazolyl, Thiadiazolyl, Oxadiazolyl, Pyridinyl, Pyrimidinyl oder Triazinyl steht.

Bei dem Substituenten R" handelt es sich dabei insbesondere um einen Alkyl-, Alkenyl-, Alkinyl-, Aryl-, Hetaryl-, Arylalkyl-, Hetarylalkyl-, Arylalkenyl-, Hetarylalkenyl-, Arylalkinyl oder Hetarylalkinylrest, der ggf. von einer oder mehreren Gruppen unterbrochen ist, die ausgewählt sind unter O, S, SO, $SO_2$, NR (R = H oder Alkyl), Co, COO, OCO, CONH, NHCO und NHCONH oder um einen Rest der wie unten definierten Formeln $CH_2ON = CR^{\alpha}CR^{\beta}$ oder $CH_2ON = CR^{y}CR^{\delta} = NOR^{\varepsilon}$. Gegebenenfalls weisen diese Reste auch einen oder mehrere (vorzugsweise 1, 2 oder 3) Substituenten auf, die unabhängig voneinander ausgewählt sind unter Alkyl, Alkoxy, Halogen, Cyano, Halogenalkyl (insbesondere $CF_3$ und $CHF_2$), Hetaryl und Aryl. Hetaryl und Aryl können ihrerseits wieder 1, 2 oder 3 Substituenten aufweisen, die unabhängig voneinander ausgewählt sind unter Halogen, Halogenalkyl (insbesondere $CF_3$ und $CHF_2$), Phenyl, CN, Phenoxy, Alkyl, Alkoxy und Halogenalkoxy.

Derartige Verbindungen und ihre Herstellung sind in der Literatur beschrieben, die in den nachfolgenden Tabellen I.1 bis I.8 angegeben ist. Dort nicht beschriebene Verbindungen können analog hergestellt werden.

Gemäß einer bevorzugten Ausführungsform enthalten die erfindungsgemäßen Mittel eine Verbindung der Formel IA oder IB, worin R" für Aryloxy, Hetaryloxy, Aryloxymethylen, Hetaryloxymethylen, Arylethenylen oder Hetarylethenylen steht, wobei diese Reste gegebenenfalls 1, 2 oder 3 Substituenten aufweisen, die unabhängig voneinander ausgewählt sind unter Alkyl, Halogen, $CF_3$, $CHF_2$, CN, Alkoxy und Phenyl, das seinerseits 1, 2 oder 3 Substituenten aufweisen kann, die unabhängig voneinander ausgewählt sind unter Halogen, $CF_3$, $CHF_2$, Phenyl, CN, Phenoxy, Alkyl, Alkoxy und Halogenalkoxy;
oder R" für

$$CH_2ON{=}CR^{\alpha}R^{\beta} \text{ oder } CH_2ON{=}CR^{\gamma}CR^{\delta}{=}NOR^{\varepsilon}$$

steht, wobei $R^{\alpha}$ für Alkyl steht;
$R^{\beta}$ für Phenyl, Pyridyl oder Pyrimidyl steht, das gegebenenfalls 1, 2 oder 3 Substituenten aufweist, die unabhängig voneinander ausgewählt sind unter Alkyl, Alkoxy, Halogen, Halogenalkoxy, $CF_3$ und $CHF_2$;
$R^{\gamma}$ für Alkyl, Alkoxy, Halogen, Halogenalkyl oder Wasserstoff steht;

$R^{\delta}$ für Wasserstoff, Cyano, Halogen, Alkyl, Alkoxy, Alkylthio, Alkylamino, Di-Alkylamino, Alkenyl, Alkenyloxy, Alkenylthio, Alkenylamino, N-Alkenyl-N-alkylamino, Alkinyl, Alkinyloxy, Alkinylthio, Alkinylamino, N-Alkinyl-N-alkylamino, wobei die Kohlenwasserstoffreste dieser Gruppen partiell oder vollständig halogeniert sein können und/ oder 1, 2 oder 3 Reste tragen können, die unabhängig ausgewählt sind unter Cyano, Nitro, Hydroxy, Alkoxy, Halogenalkoxy, Alkoxycarbonyl, Alkylthio, Alkylamino, Di-alkylamino, Alkenyloxy, Cycloalkyl, Cycloalkyloxy, Heterocyclyl, Heterocyclyloxy, Aryl, Aryloxy, Aryl-alkoxy, Hetaryl, Hetaryloxy und Hetarylalkoxy, wobei die cyclischen Reste ihrerseits partiell oder vollständig halogeniert sein können und/oder 1, 2 oder 3 Gruppen tragen können, die unabhängig ausgewählt sind unter Cyano, Nitro, Hydroxy, Alkyl, Halogenalkyl, Cycloalkyl, Alkoxy, Halogenalkoxy, Alkoxycarbonyl, Alkylthio, Alkylamino, Di-alkylamino, Alkenyl und Alkenyloxy;

oder für Cycloalkyl, Cycloalkyloxy, Cycloalkylthio, Cycloalkylamino, N-Cycloalkyl-N-alkylamino, Heterocyclyl, Heterocyclyloxy, Heterocyclylthio, Heterocyclylamino, N-Heterocyclyl-N-alkylamino, Aryl, Aryloxy, Arylthio, Arylamino, N-Aryl-N-alkylamino, Hetaryl, Hetaryloxy, Hetarylthio, Hetarylamino oder N-Hetaryl-N-alkylamino steht, wobei die cyclischen Reste partiell oder vollständig halogeniert sein können und/oder 1, 2 oder 3 Gruppen tragen können, die unabhängig ausgewählt sind unter Cyano, Nitro, Hydroxy, Alkyl, Halogenalkyl, Cycloalkyl, Alkoxy, Halogenalkoxy, Alkoxycarbonyl, Alkylthio, Alkylamino, Di-alkylamino, Alkenyl, Alkenyloxy, Benzyl, Benzyloxy, Aryl, Aryloxy, Hetaryl und Hetaryloxy, wobei die aromatischen Reste ihrerseits partiell oder vollständig halogeniert sein können und/oder 1, 2 oder 3 der folgenden Gruppen tragen können: Cyano, Alkyl, Halogenalkyl, Alkoxy, Nitro;
$R^{\varepsilon}$ für Alkyl, Alkenyl oder Alkinyl steht, wobei diese Gruppen partiell oder vollständig halogeniert ein können und/oder 1, 2 oder 3 der folgenden Reste tragen können: Cyano, Alkoxy, Cycloalkyl.
Besonders bevorzugt sind Verbindungen der Formel IA oder IB, worin
R" eine der folgenden Bedeutungen besitzt:

a) Phenyloxymethylen, Pyridinyloxymethylen, Pyrimidinyloxymethylen oder Pyrazolyloxymethylen, wobei der aromatische Rest gegebenenfalls 1, 2 oder 3 Substituenten aufweist, die unabhängig voneinander ausgewählt sind unter Alkyl, Halogen, $CF_3$, $CHF_2$, $-C(CH_3){=}NOCH_3$, und Phenyl, das gegebenenfalls mit 1, 2 oder 3 Halogenatomen und/oder Alkylgruppen substituiert ist;
b) Phenoxy oder Pyrimidinyloxy, das gegebenenfalls mit 1, 2 oder 3 Halogenatomen oder einem Phenoxyrest, der gegebenenfalls einen Halogen- oder Cyanosubstituenten aufweist, substituiert ist;
c) Phenylethenylen oder Pyrazolylethenylen, wobei der Phenyl-oder Pyrazolylrest gegebenenfalls 1, 2 oder 3 Substituenten aufweist, die unabhängig voneinander ausgewählt sind unter Halogen, $CF_3$, $CHF_2$ und Phenyl.
d) $CH_2ON{=}CR^{\alpha}R^{\beta}$,
worin $R^{\alpha}$ für Alkyl steht; und
$R^{\beta}$ für Phenyl, das gegebenenfalls 1, 2 oder 3 Substituenten aufweist, die unabhängig voneinander augewählt sind unter Alkyl, Halogen, $CF_3$ und $CHF_2$, oder für Pyrimidinyl steht, das gegebenenfalls durch 1 oder 2 Alkoxyreste substituiert ist;
e) $CH_2ON{=}CR^{\gamma}CR^{\delta}{=}NOR^{\varepsilon}$,
worin $R^{\gamma}$ für Alkyl, Alkoxy oder Halogen steht; $R^{\delta}$ für Alkyl, Cyano, Halogen, Alkoxy, Alkenyl oder Phenyl, das gegebenenfalls durch 1, 2 oder 3 Halogenatome substituiert ist, steht; und
$R^{\varepsilon}$ für Alkyl steht.

Insbesondere bevorzugt sind Verbindungen der Formel IA, worin Q für Phenyl steht und n für 0 steht.

Besonders geeignete Wirkstoffe I sind in den nachfolgenden Tabellen zusammengestellt.

Tabelle I.1A

Verbindungen der Formel IA, in denen Q Phenyl bedeutet, R' für -C($CO_2CH_3$)=$CHOCH_3$ steht, n den Wert 0 hat, R" für ggf. substituiertes (Het)aryl-oxymethylen steht, wobei die ggf. substituierte (Het)arylgruppe die folgende Bedeutung hat

Tabelle I.1B:

| Nr. | ggf. subst. (Het)aryl | Literatur |
|---|---|---|
| I.1A-1 | 2-$CH_3$-$C_6H_4$ | EP-A 226 917 |
| I.1A-2 | 2,5-$(CH_3)_2$-$C_6H_3$ | EP-A 226 917 |
| I.1A-3 | 2-$CH_3$, 4-C[$CH_3$]=$NOCH_3$-$C_6H_3$ | EP-A 386 561 |
| I.1A-4 | 2-$CH_2CH_2CH_3$, 6-$CF_3$-pyrimidin-4-yl | EP-A 407 873 |
| I.1A-5 | 2,4-$(CH_3)_2$-$C_6H_3$ | EP-A 226 917 |

Verbindungen der Formel IA, in denen R' für -C($CO_2CH_3$)=$CHOCH_3$ steht, Q Phenyl bedeutet, n den Wert 0 hat, R" für ggf. subst. (Het)aryl-oxy steht, wobei die ggf. subst. (Het)arylgruppe die folgende Bedeutung hat

Tabelle I.1C:

| Nr. | ggf. subst. (Het)aryl | Literatur |
|---|---|---|
| I.1B-1 | $C_6H_5$ | EP-A 178 826 |
| I.1B-2 | 6-[2-CN-$C_6H_4$-O]-pyrimidin-4-yl | EP-A 382 375 |

Verbindungen der Formel IA, in denen R' für -C($CO_2CH_3$)=$CHOCH_3$ steht, Q Phenyl bedeutet, n den Wert O hat, R" für ggf. subst. (Het)aryl-ethenylen steht, wobei die ggf. subst. (Het)arylgruppe die folgende Bedeutung hat

Tabelle I.1D:

| Nr. | ggf. subst. (Het)aryl | Literatur |
|---|---|---|
| I.1C-1 | 1-(2, 4-$Cl_2$-$C_6H_3$), 5-$CF_3$-pyrazol-4yl | EP-A 528 245 |
| I.1C-2 | 1-(4-Cl-$C_6H_4$)-pyrazol-4-yl | EP-A 378 755 |
| I.1C-3 | 3-$CF_3$-$C_6H_4$ | EP-A 203 606 |
| I.1C-4 | 3-Cl-$C_6H_4$ | EP-A 203 606 |
| I.1C-5 | 4-$C_6H_5$-$C_6H_4$ | EP-A 203 606 |

Verbindungen der Formel IA, in denen Q Phenyl bedeutet, R' für -C($CO_2CH_3$)=$CHOCH_3$ steht, n den Wert 0 hat, R" für $CH_2ON$=$CR^{\alpha}R^{\beta}$ steht, wobei $R^{\alpha}$ und $R^{\beta}$ die folgende Bedeutung haben

Tabelle I.1E:

| Nr. | $R^{\alpha}$ | $R^{\beta}$ | Literatur |
|---|---|---|---|
| I.1D-1 | $CH_3$ | 4-Cl-$C_6H_4$ | EP-A 370 629 |
| I.1D-2 | $CH_3$ | 3-$CF_3$-$C_6H_4$ | EP-A 370 629 |
| I.1D-3 | $CH_3$ | 4-$OCH_2CH_3$-pyrimidin-2yl | WO-A 92/18,487 |

Verbindungen der Formel IA, in denen Q Phenyl bedeutet, R' für - C($CO_2CH_3$)=$CHOCH_3$ steht, n den Wert 0 hat, R" für $CH_2ON$=$CR^{\gamma}CR^{\delta}$=$NOR^{\varepsilon}$ steht, wobei $R^{\gamma}$, $R^{\delta}$ und $R^{\varepsilon}$ die folgende Bedeutung haben

Tabelle I.2A:

| Nr. | $R^{\gamma}$ | $R^{\delta}$ | $R^{\varepsilon}$ | Literatur |
|---|---|---|---|---|
| I.1-1 | $CH_3$ | $CH_3$ | $CH_3$ | WO-A 95/21153 |
| I.1E-2 | $CH_3$ | $CH_3$ | $CH_2CH_3$ | WO-A 95/21153 |
| I.1E-3 | $CH_3$ | $C_6H_5$ | $CH_3$ | WO-A 95/21153 |
| I.1E-4 | $CH_3$ | $C_6H_5$ | $CH_2CH_3$ | WO-A 95/21153 |
| I.1E-5 | $CH_3$ | 4-Cl-$C_6H_4$ | $CH_3$ | WO-A 95/21153 |
| I.1E-6 | $CH_3$ | 4-Cl-$C_6H_4$ | $CH_2CH_3$ | WO-A 95/21153 |

Verbindungen der Formel IA, in denen Q Phenyl bedeutet, R' für -$C(CO_2CH_3)$=$NOCH_3$ steht, n den Wert 0 hat, R" für ggf. subst. (Het)aryl-oxymethylen steht, wobei die ggf. subst. (Het)arylgruppe die folgende Bedeutung hat

Tabelle I.2B:

| Nr. | ggf. subst. (Het)aryl | Literatur |
|---|---|---|
| I.2A-1 | 2-$CH_3$-$C_6H_4$ | EP-A 253 213 |
| I.2A-2 | 2,5-$(CH_3)_2$-$C_6H_3$ | EP-A 400 417 |
| I.2A-3 | 2,4-$(CH_3)_2$-$C_6H_3$ | EP-A 400 417 |
| I.2A-4 | 2,3,5-$(CH_3)_3$-$C_6H_2$ | EP-A 400 417 |
| I.2A-5 | 2-Cl, 5-$CH_3$-$C_6H_3$ | EP-A 400 417 |
| I.1A-6 | 2-$CH_3$, 4-C[$CH_3$]=$NOCH_3$-$C_6H_3$ | EP-A 386 561 |

Verbindungen der Formel IA, in denen Q Phenyl bedeutet, R' für-$C(CO_2CH_3)$=$NOCH_3$ steht, n den Wert 0 hat, R" für ggf. subst. (Het)aryl-oxy steht, wobei die ggf. subst. (Het)arylgruppe die folgende Bedeutung hat

Tabelle I.2C:

| Nr. | ggf. subst. (Het)aryl | Literatur |
|---|---|---|
| I.2B-1 | $C_6H_5$ | EP-A 253 213 |
| I.2B-2 | 6-[2-CN-$C_6H_4$-O]-pyrimidin-4-yl | EP-A 468 684 |

Verbindungen der Formel IA, in denen Q Phenyl bedeutet, R' für -$C(CO_2CH_3)$=$NOCH_3$ steht, n den Wert 0 hat, R" für $CH_2ON$=$CR^{\alpha}R^{\beta}$ steht, wobei $R^{\alpha}$ und $R^{\beta}$ die folgende Bedeutung haben

Tabelle I.2D:

| Nr. | $R^{\alpha}$ | $R^{\beta}$ | Literatur |
|---|---|---|---|
| I.2C-1 | $CH_3$ | 4-Cl-$C_6H_4$ | EP-A 463 488 |
| I.2C-2 | $CH_3$ | 3-Cl-$C_6H_4$ | EP-A 463 488 |
| I.2C-3 | $CH_3$ | 4-$CF_3$-$C_6H_4$ | EP-A 463 488 |
| I.2C-4 | $CH_3$ | 3-$CF_3$-$C_6H_4$ | EP-A 463 488 |
| I.2C-5 | $CH_3$ | 4-$CH_3$-$C_6H_4$ | EP-A 463 488 |
| I.2C-6 | $CH_3$ | 4-$OCH_2CH_3$-pyrimidin-2-yl | EP-A 472 300 |
| I.2C-7 | $CH_3$ | 3,5-$Cl_2$-$C_6H_3$ | EP-A 463 488 |

Verbindungen der Formel IA, in denen Q Phenyl bedeutet, R' für - $C(CO_2CH_3)$=$NOCH_3$ steht, n den Wert 0 hat, R" für $CH_2ON$=$CR^{\gamma}CR^{\delta}$ =$NOR^{\varepsilon}$ steht, wobei $R^{\gamma}$, $R^{\delta}$ und $R^{\varepsilon}$ die folgende Bedeutung haben

Tabelle I.3A:

| Nr. | $R^{\gamma}$ | $R^{\delta}$ | $R^{\varepsilon}$ | Literatur |
|---|---|---|---|---|
| I.2D-1 | $CH_3$ | $CH_3$ | $CH_3$ | WO-A 95/21153 |
| I.2D-2 | $CH_3$ | $CH_3$ | $CH_2CH_3$ | WO-A 95/21153 |
| I.2D-3 | $CH_3$ | $C_6H_5$ | $CH_3$ | WO-A 95/21153 |
| I.2D-4 | $CH_3$ | $C_6H_5$ | $CH_2CH_3$ | WO-A 95/21153 |
| I.2D-5 | $CH_3$ | 4-Cl-$C_6H_4$ | $CH_3$ | WO-A 95/21153 |
| I.2D-6 | $CH_3$ | 4-Cl-$C_6H_4$ | $CH_2CH_3$ | WO-A 95/21153 |

Verbindungen der Formel IA, in denen Q Phenyl bedeutet, R' für -C($CONHCH_3$)=$NOCH_3$ steht, n den Wert 0 hat, R'' für ggf. subst. (Het)aryl-oxymethylen steht, wobei die ggf. subst. (Het)aryl-gruppe die folgende Bedeutung hat

Tabelle I.3B:

| Nr. | ggf. subst. (Het)aryl | Literatur |
|---|---|---|
| I.3A-1 | 2-$CH_3$-$C_6H_4$ | EP-A 477 631 |
| I.3A-2 | 2,5-$(CH_3)_2$-$C_6H_3$ | EP-A 477 631 |
| I.3A-3 | 2,4-$(CH_3)_2$-$C_6H_3$ | EP-A 477 631 |
| I.3A-4 | 2,3,5-$(CH_3)_3$-$C_6H_2$ | EP-A 477 631 |
| I.3A-5 | 2-$CH_3$, 4-C[$CH_3$]=$NOCH_3$-$C_6H_3$ | EP-A 579 124 |
| I.3A-6 | 1-[4-Cl-$C_6H_4$]-pyrazol-3-yl | WO-A 94/19331 |
| I.3A-7 | 1-[2,4-$Cl_2$-$C_6H_3$]-pyrazol-3-yl | WO-A 94/19331 |

Verbindungen der Formel IA, in denen Q Phenyl bedeutet, R' für -C($CONHCH_3$)=$NOCH_3$ steht, n den Wert 0 hat, R'' für ggf. subst. (Het)aryl-oxy steht, wobei die ggf. subst. (Het)arylgruppe die folgende Bedeutung hat

Tabelle I.3C:

| Nr. | ggf. subst. (Het)aryl | Literatur |
|---|---|---|
| I.3B-1 | $C_6H_5$ | EP-A 398 692 |
| I.3B-2 | 6-[2-CN-$C_6H_4$-O]-pyrimidin-4-yl | GB-A 2 253 624 |

Verbindungen der Formel IA, in denen Q Phenyl bedeutet, R' für - C($CONHCH_3$)=$NOCH_3$ steht, n den Wert 0 hat, R'' für ggf. subst. (Het)aryl-ethenylen steht, wobei die ggf. subst. (Het)arylgruppe die folgende Bedeutung hat

Tabelle I.3D:

| Nr. | ggf. subst. (Het)aryl | Literatur |
|---|---|---|
| I.3C-1 | 1-[2,4-$Cl_2$-$C_6H_3$], 5-$CF_3$-pyrazol-4yl | DE-A 44 23 615.8 |

Verbindungen der Formel IA, in denen Q Phenyl bedeutet, R' für -C($CONHCH_3$)=$NOCH_3$ steht, n den Wert 0 hat, R'' für $CH_2ON{=}CR^{\alpha}R^{\beta}$ steht, wobei $R^{\alpha}$ und $R^{\beta}$ die folgende Bedeutung haben

Tabelle I.3E:

| Nr. | $R^{\alpha}$ | $R^{\beta}$ | Literatur |
|---|---|---|---|
| I.3D-1 | $CH_3$ | 4-Cl-$C_6H_4$ | EP-A 463 488 |
| I.3D-2 | $CH_3$ | 3-$Cl_3$-$C_6H_4$ | EP-A 463 488 |
| I.3D-3 | $CH_3$ | 4-$CF_3$-$C_6H_4$ | EP-A 585 751 |

Tabelle I.3E: (fortgesetzt)

| Nr. | $R^{\alpha}$ | $R^{\beta}$ | Literatur |
|---|---|---|---|
| I.3D-4 | $CH_3$ | $3\text{-}CF_3\text{-}C_6H_4$ | EP-A 585 751 |
| I.3D-5 | $CH_3$ | $4\text{-}CH_3\text{-}C_6H_4$ | EP-A 463 488 |
| I.3D-6 | $CH_3$ | $3,5\text{-}Cl_2\text{-}C_6H_3$ | EP-A 463 488 |
| I.3D-7 | $CH_3$ | $2\text{-}OCH_2CH_3$-pyrimidin-2yl | WO-A 92/13,830 |

Verbindungen der Formel IA, in denen Q Phenyl bedeutet, R' für $-C(CONHCH_3)=NOCH_3$ steht, n den Wert 0 hat, R" für $CH_2ON=CR^{\gamma}CR^{\delta}=NOR^{\varepsilon}$ steht, wobei $R^{\gamma}$, $R^{\delta}$ und $R^{\varepsilon}$ die folgende Bedeutung haben

Tabelle I.4A:

| Nr. | $R^{\gamma}$ | $R^{\delta}$ | $R^{\varepsilon}$ | Literatur |
|---|---|---|---|---|
| I.3E-1 | $CH_3$ | $CH_3$ | $CH_3$ | WO-A 95/21154 |
| I.3E-2 | $CH_3$ | $CH_3$ | $CH_2CH_3$ | WO-A 95/21154 |
| I.3E-3 | $CH_3$ | $C_6H_5$ | $CH_3$ | WO-A 95/21154 |
| I.3E-4 | $CH_3$ | $C_6H_5$ | $CH_2CH_3$ | WO-A 95/21154 |
| I.3E-5 | $CH_3$ | $4\text{-}Cl\text{-}C_6H_4$ | $CH_3$ | WO-A 95/21154 |
| I.3E-6 | $CH_3$ | $4\text{-}Cl\text{-}C_6H_4$ | $CH_2CH_3$ | WO-A 95/21154 |
| I.3E-7 | $CH_3$ | $4\text{-}F\text{-}C_6H_4$ | $CH_3$ | WO-A 95/21154 |

Verbindungen der Formel IA, in denen Q Phenyl bedeutet, R' für $-C(CO_2CH_3)=CHCH_3$ steht, n den Wert 0 hat, R" für ggf. subst. (Het)aryl-oxymethylen steht, wobei die ggf. subst. (Het)aryl-gruppe die folgende Bedeutung hat

Tabelle I.4B:

| Nr. | ggf. subst. (Het)aryl | Literatur |
|---|---|---|
| I.4A-1 | $2\text{-}CH_3\text{-}C_6H_4$ | EP-A 280 185 |
| I.4A-2 | $2,5\text{-}(CH_3)_2\text{-}C_6H_3$ | EP-A 513 580 |
| I.4A-3 | $2,4\text{-}(CH_3)_2\text{-}C_6H_3$ | EP-A 513 580 |
| I.4A-4 | $2,3,5\text{-}(CH_3)_3\text{-}C_6H_2$ | EP-A 513 580 |
| I.4A-5 | $2\text{-}Cl, 5\text{-}CH_3\text{-}C_6H_3$ | EP-A 513 580 |
| I.4A-6 | $2\text{-}CH_3, 4\text{-}C[CH_3]=NOCH_3\text{-}C_6H_3$ | EP-A 513 580 |
| I.4A-7 | $1\text{-}[4\text{-}Cl\text{-}C_6H_4]$-pyrazol-3-yl | DE-A 44 15 483.6 |

Verbindungen der Formel IA, in denen Q Phenyl bedeutet, R' für $-C(CO_2CH_3)=CHCH_3$ steht, n den Wert 0 hat, R" für ggf. subst. (Het)aryl-oxy steht, wobei die ggf. subst. (Het)arylgruppe die folgende Bedeutung hat

Tabelle I.4C:

| Nr. | ggf. subst. (Het)aryl | Literatur |
|---|---|---|
| I.4B-1 | $C_6H_5$ | EP-A 513 580 |

Verbindungen der Formel IA, in denen Q Phenyl bedeutet, R' für $-C(CO_2CH_3)=CHCH_3$ steht, n den Wert 0 hat, R" für $CH_2ON=CR^{\gamma}CR^{\delta}=NOR^{\varepsilon}$ steht, wobei $R^{\gamma}$, $R^{\delta}$ und $R^{\varepsilon}$ die folgende Bedeutung haben

Tabelle I.5A:

| Nr. | $R^{\gamma}$ | $R^{\delta}$ | $R^{\varepsilon}$ | Literatur |
|---|---|---|---|---|
| I.4C-1 | $CH_3$ | $CH_3$ | $CH_3$ | WO-A 95/21153 |

Tabelle I.5A: (fortgesetzt)

| Nr. | $R^\gamma$ | $R^\delta$ | $R^\varepsilon$ | Literatur |
|---|---|---|---|---|
| I.4C-2 | $CH_3$ | $CH_3$ | $CH_2CH_3$ | WO-A 95/21153 |
| I.4C-3 | $CH_3$ | $C_6H_5$ | $CH_3$ | WO-A 95/21153 |
| I.4C-4 | $CH_3$ | $C_6H_5$ | $CH_2CH_3$ | WO-A 95/21153 |
| I.4C-5 | $CH_3$ | 4-Cl-$C_6H_4$ | $CH_3$ | WO-A 95/21153 |
| I.4C-6 | $CH_3$ | 4-Cl-$C_6H_4$ | $CH_2CH_3$ | WO-A 95/21153 |

Verbindungen der Formel IA, in denen Q Phenyl bedeutet, R' für -$C(CO_2CH_3)=CHCH_2CH_3$ steht, n den Wert 0 hat, R" für ggf. subst. (Het)aryl-oxymethylen steht, wobei die ggf. subst. (Het)aryl-gruppe die folgende Bedeutung hat

Tabelle I.5B:

| Nr. | ggf. subst. (Het)aryl | Literatur |
|---|---|---|
| I.5A-1 | 2-$CH_3$-$C_6H_4$ | EP-A 513 580 |
| I.5A-2 | 2,5-$(CH_3)_2$-$C_6H_3$ | EP-A 513 580 |
| I.5A-3 | 2,4-$(CH_3)_2$-$C_6H_3$ | EP-A 513 580 |
| I.5A-4 | 2,3,5-$(CH_3)_3$-$C_6H_2$ | EP-A 513 580 |
| I.5A-5 | 2-Cl, 5-$CH_3$-$C_6H_3$ | EP-A 513 580 |
| I.5A-6 | 2-$CH_3$, 4-$C[CH_3]=NOCH_3$-$C_6H_3$ | EP-A 513 580 |

Verbindungen der Formel IA, in denen Q Phenyl bedeutet, R' für -$C(CO_2CH_3)=CHCH_2CH_3$ steht, n den Wert 0 hat, R" für ggf. subst. (Het)aryl-oxy steht, wobei die ggf. subst. (Het)arylgruppe die folgende Bedeutung hat

Tabelle I.5C:

| Nr. | ggf. subst. (Het)aryl | Literatur |
|---|---|---|
| I.5B-1 | $C_6H_5$ | EP-A 513 580 |

Verbindungen der Formel IA, in denen Q Phenyl bedeutet, R' für -$C(CO_2CH_3)=CHCH_2CH_3$ steht, n den Wert 0 hat, R" für $CH_2ON=CR^\gamma CR^\delta=NOR^\varepsilon$ steht, wobei $R^\gamma$ , $R^\delta$ und $R^\varepsilon$ die folgende Bedeutung haben

Tabelle I.6A

| Nr. | $R^\gamma$ | $R^\delta$ | $R^\varepsilon$ | Literatur |
|---|---|---|---|---|
| I.5C-1 | $CH_3$ | $CH_3$ | $CH_3$ | WO-A 95/21153 |
| I.5C-2 | $CH_3$ | $CH_3$ | $CH_2CH_3$ | WO-A 95/21153 |
| I.5C-3 | $CH_3$ | $C_6H_5$ | $CH_3$ | WO-A 95/21153 |
| I.5C-4 | $CH_3$ | $C_6H_5$ | $CH_2CH_3$ | WO-A 95/21153 |
| I.5C-5 | $CH_3$ | 4-Cl-$C_6H_4$ | $CH_3$ | WO-A 95/21153 |
| I.5C-6 | $CH_3$ | 4-Cl-$C_6H_4$ | $CH_2CH_3$ | WO-A 95/21153 |

Verbindungen der Formel IA, in denen Q Phenyl bedeutet, R' für -$C(COCH_3)=NOCH_3$ steht, n den Wert 0 hat, R" für ggf. subst. (Het)aryl-oxymethylen steht, wobei die ggf. subst. (Het)aryl-gruppe die folgende Bedeutung hat

Tabelle I.6B:

| Nr. | ggf. subst. (Het)aryl | Literatur |
|---|---|---|
| I.6A-1 | 2-$CH_3$-$C_6H_4$ | EP-A 498 188 |
| I.6A-2 | 2,5-$(CH_3)_2$-$C_6H_3$ | EP-A 498 188 |

Tabelle I.6B: (fortgesetzt)

| Nr. | ggf. subst. (Het)aryl | Literatur |
|---|---|---|
| I.6A-3 | 2,4-$(CH_3)_2$-$C_6H_3$ | EP-A 498 188 |
| I.6A-4 | 2,3,5-$(CH_3)_3$-$C_6H_2$ | EP-A 498 188 |
| I.6A-5 | 2-$CH_3$, 4-C[$CH_3$]=$NOCH_3$-$C_6H_3$ | EP-A 498 188 |

Verbindungen der Formel IA, in denen Q Phenyl bedeutet, R' für -C($COCH_3$)=$NOCH_3$ steht, n den Wert 0 hat, R'' für ggf. subst. (Het)aryl-oxy steht, wobei die ggf. subst. (Het)arylgruppe die folgende Bedeutung hat

Tabelle I.7A:

| Nr. | ggf. subst. (Het)aryl | Literatur |
|---|---|---|
| I.6B-1 | $C_6H_5$ | EP-A 498 188 |
| I.6B-2 | 6-[2-CN-$C_6H_4$-O]-pyrimidin-4-yl | EP-A 498 188 |

Verbindungen der Formel IA, in denen Q Phenyl bedeutet, R' für -C($COCH_2CH_3$)=$NOCH_3$ steht, n den Wert 0 hat, R'' für ggf. subst. (Het)aryl-oxymethylen steht, wobei die ggf. subst. (Het)aryl-gruppe die folgende Bedeutung hat

Tabelle I.7B:

| Nr. | ggf. subst. (Het)aryl | Literatur |
|---|---|---|
| I.7A-1 | 2-$CH_3$-$C_6H_4$ | EP-A 498 188 |
| I.7A-2 | 2,5-$(CH_3)_2$-$C_6H_3$ | EP-A 498 188 |
| I.7A-3 | 2,4-$(CH_3)_2$-$C_6H_3$ | EP-A 498 188 |
| I.7A-4 | 2,3,5-$(CH_3)_3$-$C_6H_2$ | EP-A 498 188 |
| I.7A-5 | 2-$CH_3$, 4-C[$CH_3$]=$NOCH_3$-$C_6H_3$ | EP-A 498 188 |

Verbindungen der Formel IA, in denen Q Phenyl bedeutet, R' für -C($COCH_2CH_3$)=$NOCH_3$ steht, n den Wert 0 hat, R'' für ggf. subst. (Het)aryl-oxy steht, wobei die ggf. subst. (Het)arylgruppe die folgende Bedeutung hat

Tabelle I.8A:

| Nr. | ggf. subst. (Het)aryl | Literatur |
|---|---|---|
| I.7B-1 | $C_6H_5$ | EP-A 498 188 |
| I.7B-2 | 6-[2-CN-$C_6H_4$-O]-pyrimidin-4-yl | EP-A 498 188 |

Verbindungen der Formel IA, in denen Q Phenyl bedeutet, R' für -N($OCH_3$)-$CO_2CH_3$ steht, n den Wert 0 hat, R'' für ggf. subst. (Het)aryl-oxymethylen steht, wobei die ggf. subst. (Het)aryl-gruppe die folgende Bedeutung hat

Tabelle I.8B:

| Nr. | ggf. subst. (Het)aryl | Literatur |
|---|---|---|
| I.8A-1 | 2-$CH_3$-$C_6H_4$ | WO-A 93/15,046 |
| I.8A-2 | 2,5-$(CH_3)_2$-$C_6H_3$ | WO-A 93/15,046 |
| I.8A-3 | 2,4-$(CH_3)_2$-$C_6H_3$ | WO-A 93/15,046 |
| I.8A-4 | 2,3,5-$(CH_3)_3$-$C_6H_2$ | WO-A 93/15,046 |
| I.8A-5 | 2-Cl, 5-$CH_3$-$C_6H_3$ | WO-A 93/15,046 |
| I.8A-6 | 2-$CH_3$, 4-C[$CH_3$]=$NOCH_3$-$C_6H_3$ | WO-A 93/15,046 |
| I.8A-7 | 2-$CH_3$, 4-C[$CH_3$]=$NOCH_2CH_3$-$C_6H_3$ | WO-A 93/15,046 |
| I.8A-8 | 2-$CH_3$, 4-C[$CH_2CH_3$]=$NOCH_3$-$C_6H_3$ | WO-A 93/15,046 |

Tabelle I.8B: (fortgesetzt)

| Nr. | ggf. subst. (Het)aryl | Literatur |
|---|---|---|
| I.8A-9 | 2-$CH_3$, 4-C[$CH_2CH_3$]=$NOCH_2CH_3$-$C_6H_3$ | WO-A 93/15,046 |
| I.8A-10 | 1-[4-Cl-$C_6H_4$]-pyrazol-3-yl | DE-A 44 23 612.3 |

Verbindungen der Formel IA, in denen Q Phenyl bedeutet, R' für -$N(OCH_3)=CO_2CH_3$ steht, n den Wert 0 hat, R'' für $CH_2ON=CR^{\alpha}R^{\beta}$ steht, wobei $R^{\alpha}$ und $R^{\beta}$ die folgende Bedeutung haben

| Nr. | $R^{\alpha}$ | $R^{\beta}$ | Literatur |
|---|---|---|---|
| I.8B-1 | $CH_3$ | 3,5-$Cl_2$-$C_6H_3$ | WO-A 93/15,046 |

Gemäß einer weiteren bevorzugten Ausführungsform enthält das erfindungsgemäße Mittel als Amidverbindung eine Verbindung der Formel II, worin A die folgenden Bedeutungen besitzt: Phenyl, Pyridyl, Dihydropyranyl, Dihydrooxathiinyl, Dihydro-oxathiinyloxid, Dihydrooxathiinyldioxid, Furyl, Thiazolyl, Pyrazolyl oder Oxazolyl, wobei diese Gruppen 1, 2 oder 3 Substituenten aufweisen können, die unabhängig voneinander ausgewählt sind unter Alkyl, Halogen, Difluormethyl und Trifluormethyl.

Gemäß einer weiteren bevorzugten Ausführungsform steht A für:

Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;

Phenyl, das gegebenenfalls in 2-Stellung durch Methyl, Trifluormethyl, Chlor, Brom oder Iod substituiert ist;

2-Methyl-5,6-dihydropyran-3-yl;

2-Methyl-5,6-dihydro-1,4-oxathiin-3-yl oder das 4-Oxid oder 4,4-Dioxid davon;

2-Methyl-furan-3-yl, das gegebenenfalls in 4- und/oder 5-Stellung durch Methyl substituiert ist;

Thiazol-5-yl, das gegebenenfalls in 2- und/oder 4-Stellung durch Methyl, Chlor, Difluormethyl oder Trifluormethyl substituiert ist;

Thiazol-4-yl, das gegebenenfalls in 2- und/oder 5-Stellung durch Methyl, Chlor, Difluormethyl oder Trifluormethyl substituiert ist;

l-Methylpyrazol-4-yl, das gegebenenfalls in 3- und/oder 5-Stellung durch Methyl, Chlor, Difluormethyl oder Trifluormethyl substituiert ist; oder

Oxazol-5-yl, das gegebenenfalls in 2- und/oder 4-Stellung durch Methyl oder Chlor substituiert ist.

Gemäß einer weiteren bevorzugten Ausführungsform enthalten die erfindungsgemäßen Mittel als Amidverbindung eine Verbindung der Formel II, worin $R^2$ für eine Phenylgruppe steht, die gegebenenfalls substituiert ist durch 1, 2 oder 3 der oben genannten Substituenten.

Gemäß einer weiteren bevorzugten Ausführungsform enthalten die erfindungsgemäßen Mittel als Amidverbindung eine Verbindung der Formel II, worin $R^2$ für eine Phenylgruppe steht, die in 2-Stellung einen der folgenden Substituenten aufweist:

$C_3$-$C_6$-Alkyl, $C_5$-$C_6$-Cycloalkenyl, $C_5$-$C_6$-Cycloalkyloxy, $C_5$-$C_6$-Cycloalkenyloxy, wobei diese Gruppen durch 1, 2 oder 3 $C_1$-$C_4$-Alkyl-gruppen substituiert sein können,

Phenyl, das durch 1 bis 5 Halogenatome und/oder 1 bis 3 Gruppen, die unabhängig voneinander ausgewählt sind unter $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio und $C_1$-$C_4$-Halogenalkylthio, substituiert ist,

Indanyl oder Oxaindanyl, das gegebenenfalls durch 1, 2 oder 3 $C_1$-$C_4$-Alkylgruppen substituiert ist.

Gemäß einer weiteren bevorzugten Ausführungsform enthalten die erfindungsgemäßen Mittel als Amidverbindung eine Verbindung der Formel IIa,

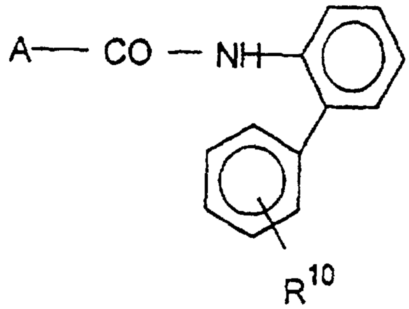

(IIa)

worin

A für

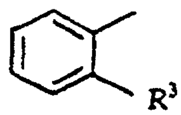

(A1)

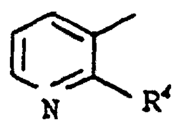

(A2)

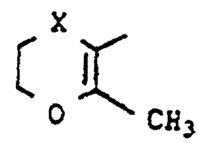

(A3)

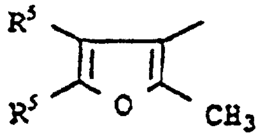

(A4)

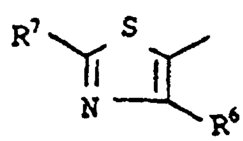

(A5)

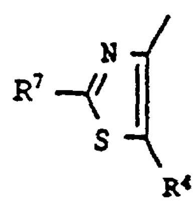

(A6)

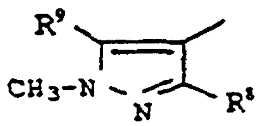

(A7)

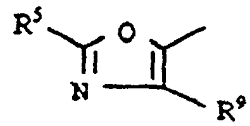

(A8)

steht;

X für Methylen, Schwefel, Sulfinyl oder Sulfonyl ($SO_2$) steht,

$R^3$ für Methyl, Difluormethyl, Trifluormethyl, Chlor, Brom oder Jod steht,

$R^4$ für Trifluormethyl oder Chlor steht,

$R^5$ für Wasserstoff oder Methyl steht,

$R^6$ für Methyl, Difluormethyl, Trifluormethyl oder Chlor steht,

$R^7$ für Wasserstoff, Methyl oder Chlor steht,

$R^8$ für Methyl, Difluormethyl oder Trifluormethyl steht,

$R^9$ für Wasserstoff, Methyl, Difluormethyl, Trifluormethyl oder Chlor steht,

$R^{10}$ für $C_1$-$C_4$-Alkyl, $C_1$-$C_4$-Alkoxy, $C_1$-$C_4$-Alkylthio oder Halogen steht.

Gemäß einer besonders bevorzugten Ausführungsform enthalten die Mittel als Amidverbindung eine Verbindung der Formel IIb

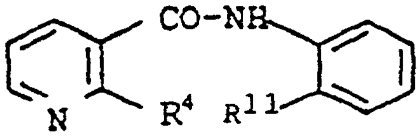

(IIb)

worin

$R^4$ für Halogen steht und
$R^{11}$ für Phenyl steht, das durch Halogen substituiert ist.

Brauchbare Amidverbindungen sind in der EP-A-545 099 und 589 301, auf die hiermit in vollem Umfang Bezug genommen wird, genannt.

Die Herstellung der Amidverbindungen der Formel I ist beispielsweise aus der EP-A-545 099 oder 589 301 bekannt oder kann nach analogen Verfahren erfolgen.

Um die synergistische Wirkung zu entfalten, setzt man die Wirkstoffe in einem Gewichtsverhältnis ein, das im Bereich von 20:1 bis 1:20, insbesondere 10:1 bis 1:10, liegt.

Gegenstand der Erfindung ist auch ein Verfahren zur Bekämpfung von Schadpilzen, das dadurch gekennzeichnet ist, daß man die Pilze, deren Lebensraum oder die vor Pilzbefall zu schützenden Materialien, Pflanzen, Samen, Böden, Flächen oder Räume mit einem wie oben definierten Mittel behandelt, wobei die Anwendung der Wirkstoffe gleichzeitig, und zwar gemeinsam oder getrennt, oder nacheinander erfolgen kann.

Die erfindungsgemäßen Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungs-gemäßen Wirkstoffe gewährleisten.

Normalerweise werden die Pflanzen mit den Wirkstoffen besprüht oder bestäubt oder die Samen der Pflanzen mit den Wirkstoffen behandelt.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether-und Fettalkoholsulfaten, sowie Salze sulfatierter Hexa-, Hepta-und Octadecanole, sowie Fettalkoholglykolether, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isoctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele,

Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Beispiele für solche Zubereitungen, welche die Wirkstoffe im Gewichtsverhältnis von 1:1 enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-l-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Fomaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die erfindungsgemäßen Mittel zeichnen sich durch eine hervorragende Wirksamkeit gegen ein breites Spektrum von pflanzenpathogenen Pilzen, insbesondere gegen Botrytis aus. Sie sind zum Teil systemisch wirksam, (d.h. sie können von der behandelten Pflanze ohne Wirkungsverlust aufgenommen und gegebenenfalls in der Pflanze transportiert werden) und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Mittel werden angewendet, indem man die Pilze oder die vor Pilzbefall zu schützenden Saatgüter, Pflanzen, Materialien oder den Erdboden mit einer fungizid wirksamen Menge der Wirkstoffe behandelt.

Die Anwendung erfolgt vor oder nach der Infektion der Materialien, Pflanzen oder Samen durch die Pilze.

Speziell eignen sich die Mittel zur Bekämpfung folgender Pflanzenkrankheiten:

Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Venturia inaequalis (Schorf) an Äpfeln,
Helminthosporium-Arten an Getreide,
Septoria nodorum an Weizen,
Botrytis cinerea (Grauschimmel) an Erdbeeren und Reben,
Cercospora arachidicola an Erdnüssen,
Pseudocercosporella herpotrichoides an Weizen und Gerste,
Pyricularia oryzae an Reis,
Fusarium- und Verticillium-Arten an verschiedenen Pflanzen, Alternaria-Arten an Gemüse und Obst,
Monilinia-Arten in Obst,

Sclerotinia-Arten in Raps und Gemüse.

Die Anwendung gegen Botrytis ist bevorzugt.

Die Mittel können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen liegen je nach Art des gewünschten Effektes zwischen 0,02 und 3 kg Wirkstoff pro ha.

Bei der Saatgutbehandlung werden im allgemeinen Wirkstoffmengen von 0,001 bis 50 g, vorzugsweise 0,01 bis 10 g je Kilogramm Saatgut benötigt.

Die erfindungsgemäßen Mittel können in der Anwendungsform als Fungizide auch andere Wirkstoffe enthalten, z.B. Herbizide, Insektizide, Wachstumsregulatoren, Fungizide oder auch Düngemittel.

Beim Vermischen mit Fungiziden erhält man dabei in vielen Fällen eine Vergrößerung des fungiziden Wirkungsspektrums.

Die folgende Liste von Fungiziden, mit denen die erfindungsgemäßen Verbindungen gemeinsam angewendet werden können, soll die Kombinationsmöglichkeiten erläutern, nicht aber einschränken:

Schwefel,
Dithiocarbonate und deren Derivate, wie
Ferridimethyldithiocarbamat,
Zinkdimethyldithiocarbamat,
Zinkethylenbisdithiocarbamat,
Manganethylenbisdithiocarbamat,
Mangan-Zink-ethylendiamin-bis-dithiocarbamat,
Tetramethylthiuramdisulfide,
Ammoniak-Komplex von Zink-(N,N-ethylen-bis-dithiocarbamat),
Ammoniak-Komplex von Zink-(N,N'-propylen-bis-dithiocarbamat),
Zink-(N,N'-propylen-bis-dithiocarbamat),
N,N'-Polypropylen-bis(thiocarbamoyl)-disulfid,
Nitroderivate, wie
Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat,
5-Nitro-isophthalsäure-di-isopropylester:
heterocyclische Substanzen, wie
2-Heptadecyl-2-imidazolin-acetat,
2,4-Dichlor-6-(o-chloranilino)-s-triazin,
O,O-Diethyl-phthalimidophosphonothioat,
5-Amino-1-[bis-(dimethylamino)-phosphinyl)]-3-phenyl-1,2,4-triazol,
2,3-Dicyano-1,4-dithioanthrachinon,
2-Thio-1,3-dithiolo[4,5-b]chinoxalin,
1-(Butylcarbamoyl) 2-benzimidazol)-carbaminsäuremethylester,
2-Methoxycarbonylamino-benzimidazol,
2-(Furyl-(2))-benzimidazol,
2-(Thiazolyl-(4))-benzimidazol,
N-(1,1,2,2-Tetrachlorethylthio)-tetrahydrophthalimid,
N-Trichlormethylthio-tetrahydrophthalimid,
N-Trichlormethylthio-phthalimid,
N-Dichlorfluormethylthio-N',N'-dimethyl-N-phenyl-schwefelsäurediamid,
5-Ethoxy-3-trichlormethyl-1,2,3-thiadiazol,
2-Rhodanmethylthiobenzothiazol,
1,4-Dichlor-2,5-dimethoxybenzol,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin,
2,3-Dihydro-5-carboxanilido-6-methyl-1,4-oxathiin-4,4-dioxid,
2-Methyl-5,6-dihydro-4H-pyran-3-carbonsäureanilid,
2-Methyl-furan-3-carbonsäureanilid,

2,5-Dimethyl-furan-3-carbonsäureanilid,
2,4,5-Trimethyl-furan-3-carbonsäureanilid,
2,5-Dimethyl-furan-3-carbonsäurecyclohexylamid,
N-Cyclohexyl-N-methoxy-2,5-dimethyl-furan-3-carbonsäureamid,
2-Methyl-benzoesäureanilid,
2-Jod-benzoesäureanilid,
N-Formyl-N-morpholin-2,2,2-trichlorethylacetat,
Piperazin-1,4-diylbis-(1-(2,2,2-trichlorethyl)-formamid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,
N-[3-(p-tert.-Butylphenyl)-2-methylpropyl]-cis-2,6-dimethylmorpholin,
N-[3-(p-tert.-Butylphenyl)-2-methylpropyl]-piperidin,
1-[2-(2,4-Dichlorphenyl)-4-ethyl-1,3-dioxolan-2-yl-ethyl]1H,1,2,4-triazol
1-[2-(2,4-Dichlorphenyl)-4-n-propyl)-1,3-dioxolan-2-yl-ethyl]-1H-1,2,4-triazol
N-(n-Propyl)-N-(2,4,6-trichlorphenoxyethyl)-N'-imidazol-yl-harnstoff,
1-(4-Chlorphenoxy)-3,3-dimethyl-1-(1H-1,2,4-triazol-1-yl)-2-butanon,
1-(4-Chlorphenyl)-3,3-dimethyl)-1-(1H-1,2,4-triazol-1-yl)-2-butanol,
α-(2-Chlorphenyl)-α-(4-chlorphenyl)-5-pyrimidinmethanol,
5-Butyl-2-dimethylamino-4-hydroxy-6-methyl-pyrimidin,
Bis-(p-chlorphenyl)-3-pyridinmethanol,
1,2-Bis-(3-ethoxycarbonyl-2-thioureido)-benzol,
1,2-Bis-(3-methoxycarbonyl-2-thioureido)-benzol,
sowie verschiedene Fungizide, wie
Dodecylguanidinacetat,
3-[3-(3,5-Dimethyl)-2-oxycyclohexyl)-2-hydroxyethyl)]glutarimid, Hexachlorbenzol,
DL-Methyl-N-(2,6-dimethylphenyl)-N-furoyl(2)-alaninat,
DL-N-(2,6-Dimethylphenyl)-N-(2'-methoxyacetyl)-alanin-methyl-ester,
N-(2,6-Dimethylphenyl)-N-chloracetyl-D,L-2-aminobutyrolacton,
DL-N-(2,6-Dimethylphenyl)-N-(phenylacetyl)-alaninmethylester,
5-Methyl-5-vinyl-3-(3,5-dichlorphenyl)-2,4-dioxo-1,3-oxazolidin,
3-[3,5-Dichlorphenyl-(5-methyl-5-methoxymethyl]-1,3-oxazolidin-2,4-dion,
3-(3,5-Dichlorphenyl)-1-isopropylcarbamoylhydantoin,
N-(3,5-Dichlorphenyl)-1,2-dimethylcyclopropan-1,2-dicarbonsäureimid,
2-Cyano[N-(ethylaminocarbonyl)-2-methoximino]-acetamid,
1-[2-(2,4-Dichlorphenyl)-pentyl]-1H-1,2,4-triazol,
2,4-Difluor-α-(1H-1,2,4-triazolyl-1-methyl)-benzhydrylalkohol,
N- (3-Chlor-2,6-dinitro-4-trifluormethyl-phenyl)-5-trifluormethyl-3-chlor-2-aminopyridin,
1-((bis-(4-Fluorphenyl)-methylsilyl)-methyl-1H-1,2,4-triazol.

Die synergistische Wirkung der erfindungsgemäßen Mittel wird anhand der folgenden Anwendungsbeispiele erläutert, wobei als Wirkstoffe I die Verbindungen der Formeln I.1 bis I.5

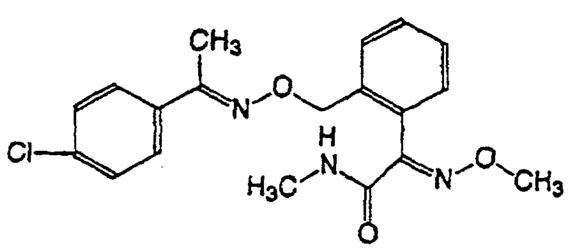

I.1

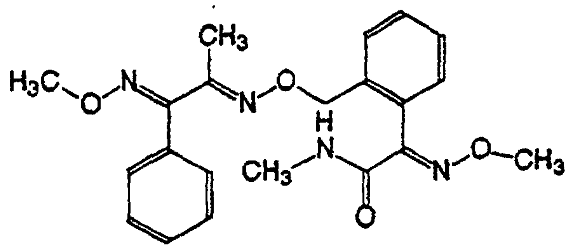

I.2

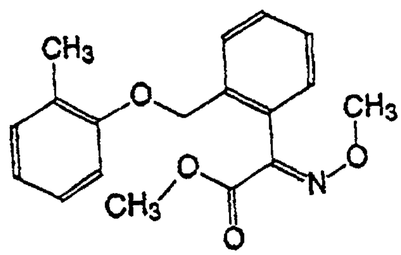

I.3

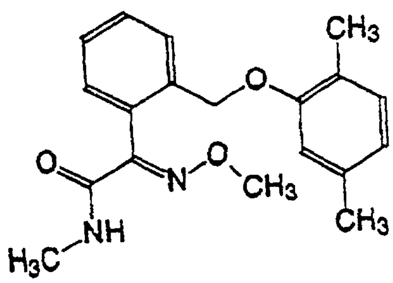

I.4

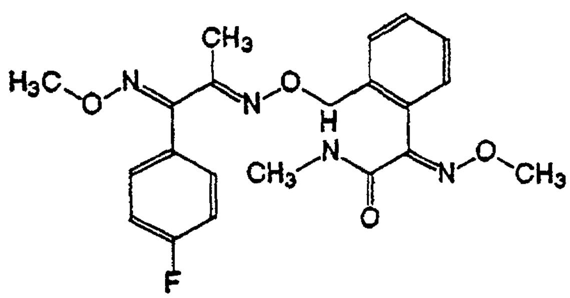

I.5

und als Amidverbindungen die Verbindungen der Formeln II.1 und II.2

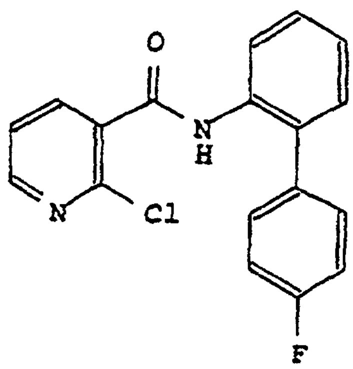

II.1

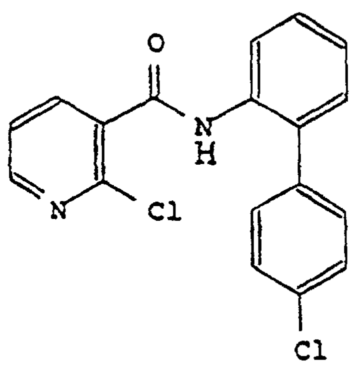

II.2

zur Anwendung kommen.

Anwendungsbeispiel 1

Wirksamkeit gegen Botrytis cinerea an Paprikaschoten

Scheiben von grünen Paprikaschoten wurden mit wäßriger Wirkstoffaufbereitung, die 80 % Wirkstoff und 20 % Emulgiermittel in der Trockensubstanz enthielt, tropfnaß besprüht. 2 Stunden nach dem Antrocknen des Spritzbelages wurden die Fruchtscheiben mit einer Sporensuspension von Botrytis cinerea, die 1,7 x $10^6$ Sporen pro ml einer 2 %igen Biomalzlösung enthielt, inokuliert. Die inokulierten Fruchtscheiben wurden anschließend in feuchten Kammern bei 18°C 4 Tage inkubiert. Dann erfolgte visuell die Auswertung der Botrytis-Entwicklung auf den befallenen Fruchtscheiben (100 % Befall).

Die visuell ermittelten Werte für den Prozentanteil befallener Fruchtfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen. Die Ergebnisse sind in der nachfolgenden Tabelle 1 angegeben.

**Tabelle 1**

| Wirkstoff | Wirkstoffkonzentration in ppm | | Wirkungsgrad in % der Kontrolle | |
|---|---|---|---|---|
| | I.1 - I.3 | II.1 | beobachtet | berechnet* |
| Kontrolle (unbehandelt) | -- | -- | 0 | -- |
| II.1 | 15<br>7,5 | | 50<br>20 | |
| I.1 | 5<br>2,5 | | 25<br>15 | |
| I.2 | 5<br>2,5 | | 20<br>10 | |
| I.3 | 5<br>2,5 | | 5<br>0 | |
| I.1 + II.1 | 5<br>2,5 | 15<br>7,5 | 99<br>97 | 62<br>32 |
| I.2 + II.1 | 5 | 15 | 96 | 55 |
| I.3 + II.1 | 5<br>2,5 | 15<br>7,5 | 86<br>60 | 52<br>20 |

* berechnet nach der Colby-Formel

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

Anwendungsbeispiel 2

Wirksamkeit gegen Botrytis cinerea

Paprikasämlinge der Sorte "Neusiedler Ideal Elite" wurden, nachdem sich 4 - 5 Blätter gut entwickelt hatten, mit wäßrigen Suspensionen, die 80 % Wirkstoff und 20 % Emulgiermittel in der Trockensubstanz enthielten, tropfnaß gespritzt. Nach dem Antrocknen des Spritzbelages wurden die Pflanzen mit einer Konidien-aufschwemmung des Pilzes Botrytis cinerea besprüht und bei 22-24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätte bedeckten (Befall 96 %).
Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen. Die Ergebnisse sind in der nachfolgenden Tabelle 2 angegeben.

Tabelle 2

| Wirkstoff | Wirkstoffkonzentration in ppm | | Wirkungsgrad in % der Kontrolle | |
|---|---|---|---|---|
| | I.1-I.5 | II.2 | beobachtet | berechnet* |
| Kontrolle (unbehandelt) | | | 0 | |
| II.2 | -- | 24<br>6<br>1,5 | 87<br>79<br>28 | -- |
| I.1 | 2<br>0,5 | -- | 0<br>0 | -- |
| I.2 | 2<br>0,5 | -- | 0<br>0 | -- |
| I.3 | 2<br>0,5 | -- | 0<br>0 | -- |
| I.4 | 2<br>0,5 | -- | 0<br>0 | -- |
| I.5 | 2<br>0,5 | -- | 0<br>0 | -- |
| I.1 + II.2 | 2<br>0,5 | 6<br>1,5 | 100<br>100 | 87<br>79 |
| I.2 + II.2 | 2<br>0,5 | 6<br>1,5 | 100<br>99 | 87<br>79 |
| I.3 + II.2 | 2<br>0,5 | 6<br>1,5 | 100<br>99 | 87<br>79 |
| I.4 + II.2 | 2<br>0,5 | 6<br>1,5 | 100<br>100 | 87<br>79 |
| I.5 + II.2 | 2<br>0,5 | 6<br>1,5 | 99<br>90 | 87<br>79 |

* berechnet nach der Colby-Formel

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

Entsprechende Ergebnisse erhält man, wenn man als Amidverbindung eine der in der folgenden Tabelle 3 genannten Verbindungen der Formel Ia:

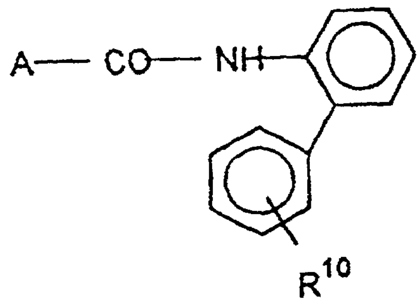

worin A für

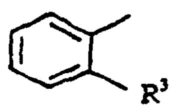

(A1)

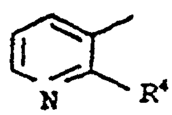

(A2)

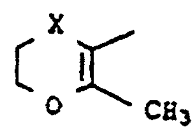

(A3)

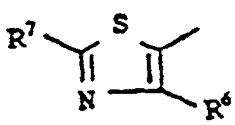

(A5)

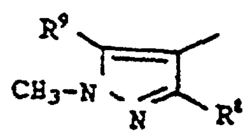

(A7)

steht, oder eine andere der in der EP-A-545 099 und 589 301 genannten Einzelverbindungen und/oder eine der in den obigen Tabellen I.1 bis I.8 genannten Einzelverbindungen einsetzt.

Tabelle 3

| Nr. | A | $R^3$ | $R^4$ | $R^5$ | $R^6$ | $R^7$ | $R^8$ | $R^9$ | $R^{10}$ | X | phys. Daten [°C] |
|---|---|---|---|---|---|---|---|---|---|---|---|
| 3.1 | $A_1$ | $CH_3$ | - | - | - | - | - | - | 2-F | - | |
| 3.2 | $A_1$ | $CH_3$ | - | - | - | - | - | - | 4-F | - | |
| 3.3 | $A_1$ | $CF_3$ | - | - | - | - | - | - | 2-F | - | |
| 3.4 | $A_1$ | $CF_3$ | - | - | - | - | - | - | 4-F | - | |
| 3.5 | $A_2$ | - | Cl | - | - | - | - | - | 2-F | - | |
| 3.6 | $A_2$ | - | Cl | - | - | - | - | - | $2-CH_3$ | - | 71 - 73 |
| 3.7 | $A_2$ | - | Cl | - | - | - | - | - | 2-Cl | - | |
| 3.8 | $A_2$ | - | Cl | - | - | - | - | - | $2-OCH_3$ | - | |
| 3.9 | $A_2$ | - | Cl | - | - | - | - | - | 3-F | - | |
| 3.10 | $A_2$ | - | Cl | - | - | - | - | - | 3-Cl | - | 95 - 98 |
| 3.11 | $A_2$ | - | Cl | - | - | - | - | - | $3-CH_3$ | - | |
| 3.12 | $A_2$ | - | Cl | - | - | - | - | - | $3-OCH_3$ | - | |
| 3.13 | $A_2$ | - | Cl | - | - | - | - | - | $3-OiC_3H_7$ | - | |
| 3.14 | $A_2$ | - | Cl | - | - | - | - | - | 3-Br | - | |
| 3.15 | $A_2$ | - | Cl | - | - | - | - | - | 4-F | - | 156 - 157 |
| 3.16 | $A_2$ | - | Cl | - | - | - | - | - | 4-Cl | - | 142 - 144 |
| 3.17 | $A_2$ | - | Cl | - | - | - | - | - | $4-CH_3$ | - | 115 - 117 |
| 3.18 | $A_2$ | - | Cl | - | - | - | - | - | $4-OCH_3$ | - | 114 - 116 |
| 3.19 | $A_2$ | - | Cl | - | - | - | - | - | $4-SCH_3$ | - | |

| Nr. | A | $R^3$ | $R^4$ | $R^5$ | $R^6$ | $R^7$ | $R^8$ | $R^9$ | $R^{10}$ | X | phys. Daten [°C] |
|---|---|---|---|---|---|---|---|---|---|---|---|
| 3.20 | $A_3$ | - | - | - | - | - | - | - | 2-F | $CH_2$ | |
| 3.21 | $A_3$ | - | - | - | - | - | - | - | 3-F | $CH_2$ | |
| 3.22 | $A_3$ | - | - | - | - | - | - | - | 4-F | $CH_2$ | |
| 3.23 | $A_3$ | - | - | - | - | - | - | - | 3-Cl | $CH_2$ | |
| 3.24 | $A_3$ | - | - | - | - | - | - | - | 3-$CH_3$ | $CH_2$ | |
| 3.25 | $A_3$ | - | - | - | - | - | - | - | 2-F | S | |
| 3.26 | $A_3$ | - | - | - | - | - | - | - | 3-F | S | |
| 3.27 | $A_3$ | - | - | - | - | - | - | - | 4-F | S | |
| 3.28 | $A_3$ | - | - | - | - | - | - | - | 3-Cl | S | |
| 3.29 | $A_3$ | - | - | - | - | - | - | - | 3-$CH_3$ | S | |
| 3.30 | $A_3$ | - | - | - | - | - | - | - | 2-F | $SO_2$ | |
| 3.31 | $A_3$ | - | - | - | - | - | - | - | 3-F | $SO_2$ | |
| 3.32 | $A_3$ | - | - | - | - | - | - | - | 4-F | $SO_2$ | |
| 3.33 | $A_3$ | - | - | - | - | - | - | - | 3-Cl | $SO_2$ | |
| 3.34 | $A_3$ | - | - | - | - | - | - | - | 3-$CH_3$ | $SO_2$ | |
| 3.35 | $A_5$ | - | - | - | $CF_3$ | $CH_3$ | - | - | 2-F | - | |
| 3.36 | $A_5$ | - | - | - | $CF_3$ | $CH_3$ | - | - | 3-F | - | |
| 3.37 | $A_5$ | - | - | - | $CF_3$ | $CH_3$ | - | - | 4-F | - | |
| 3.38 | $A_7$ | - | - | - | - | - | $CH_3$ | Cl | 2-F | - | |
| 3.39 | $A_7$ | - | - | - | - | - | $CH_3$ | Cl | 3-F | - | |
| 3.40 | $A_7$ | - | - | - | - | - | $CH_3$ | Cl | 4-F | - | |
| 3.41 | $A_7$ | - | - | - | - | - | $CF_3$ | Cl | 2-F | - | |
| 3.42 | $A_7$ | - | - | - | - | - | $CF_3$ | Cl | 4-F | - | |

## Patentansprüche

1. Mittel zur Bekämpfung von Schadpilzen, enthaltend in einem festen oder flüssigen Träger

A) mindestens einen die Atmung am Cytochrom-Komplex III hemmenden Wirkstoff der Formel I

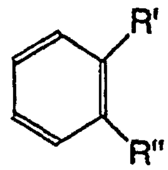

worin

R' für $-C[CO_2CH_3]=CHOCH_3$, $-C[CO_2CH_3]=NOCH_3$, $-C[CONHCH_3]=NOCH_3$, $-C[CO_2CH_3]=CHCH_3$, $-C[CO_2CH_3]=CHCH_2CH_3$, $-C[COCH_3]=NOCH_3$, $-C[COCH_2CH_3]=NOCH_3$, $-N(OCH_3)-CO_2CH_3$, $-N(CH_3)-CO_2CH_3$ oder $-N(CH_2CH_3)-CO_2CH_3$ steht;

R'' eine der folgenden Bedeutungen besitzt:

a) Phenyloxymethylen, Pyridinyloxymethylen, Pyrimidinyloxymethylen oder Pyrazolyloxymethylen, wobei der aromatische Rest gegebenenfalls 1, 2 oder 3 Substituenten aufweist, die unabhängig voneinander ausgewählt sind unter Alkyl, Halogen, $CF_3$, $CHF_2$, $-C(CH_3)=NOCH_3$, und Phenyl, das gegebenenfalls mit 1, 2 oder 3 Halogenatomen und/oder Alkylgruppen substituiert ist;
b) Phenoxy oder Pyrimidinyloxy, das gegebenenfalls mit 1, 2 oder 3 Halogenatomen oder einem Phenoxyrest, der gegebenenfalls einen Halogen- oder Cyanosubstituenten aufweist, substituiert ist;
c) $CH_2ON=CR^{\alpha}R^{\beta}$,
worin $R^{\alpha}$ für Alkyl steht; und $R^{\beta}$ für Phenyl steht, das gegebenenfalls 1, 2 oder 3 Substituenten aufweist, die unabhängig voneinander ausgewählt sind unter Alkyl, Halogen, $CF_3$ und $CHF_2$;
d) $CH_2ON=CR^{\gamma}CR^{\delta}=NOR^{\in}$ , worin $R^{\gamma}$ für Alkyl steht;

$R^{\delta}$ für Alkyl oder Phenyl, das gegebenenfalls durch 1, 2 oder 3 Halogenatome substituiert ist, steht; und
$R^{\in}$ für Alkyl oder Alkenyl steht;

und

B) mindestens eine Amidverbindung der Formel II

$$A - CO - NR^1 - R^2$$

worin

A für Pyridyl, Thiazolyl, Pyrazolyl oder Oxazolyl steht, wobei diese Gruppen 1, 2 oder 3 Substituenten aufweisen können, die unabhängig voneinander ausgewählt sind unter Alkyl, Halogen, Difluormethyl und Trifluormethyl;
$R^1$ für ein Wasserstoffatom, Alkyl oder Alkoxy steht;
$R^2$ für eine Phenyl- oder Cycloalkylgruppe steht, die gegebenenfalls einen Phenylsubstituenten aufweist, wobei der Phenylsubstituent 1 bis 5 Halogenatome und/oder 1 bis 3 Alkylsubstituenten aufweisen kann.

2. Mittel nach Anspruch 1, wobei R' für $C[CO_2CH_3]=CHCH_3$ oder $C[CONHCH_3]=NOCH_3$ steht.

3. Mittel nach Anspruch 1, das als Wirkstoff der Formel I eine Verbindung der folgenden Formeln enthält:

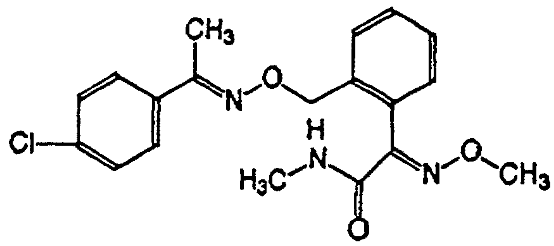

I.1

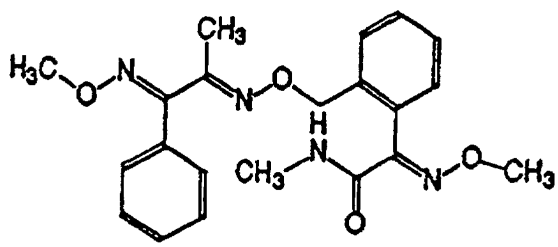

I.2

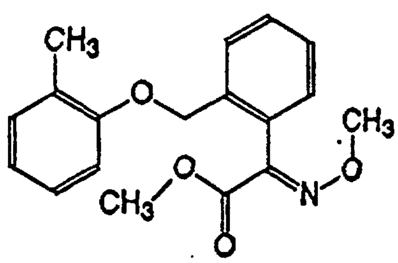

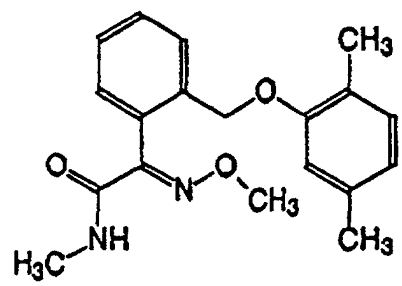

I.3

I.4

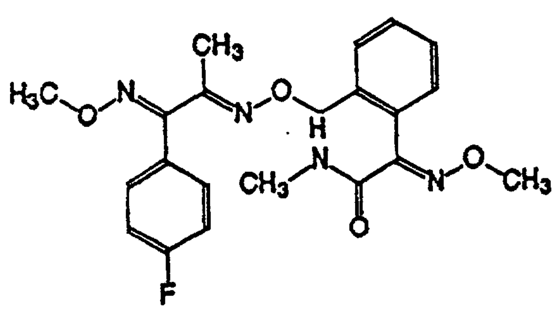

I.5

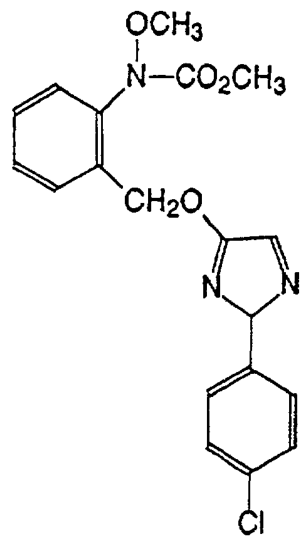

I.8 A-10

**4.** Mittel nach einem der Ansprüche 1 bis 3, das als Amidverbindung eine Verbindung der Formel II enthält, in welcher der Rest A für eine der folgenden Gruppen steht:

Pyridin-3-yl, das gegebenenfalls in 2-Stellung durch Halogen, Methyl, Difluormethyl, Trifluormethyl, Methoxy, Me-thylthio, Methylsulfinyl oder Methylsulfonyl substituiert ist;

Thiazol-5-yl, das gegebenenfalls in 2- und/oder 4-Stellung durch Methyl, Chlor, Difluormethyl oder Trifluormethyl substituiert ist;

Thiazol-4-yl, das gegebenenfalls in 2- und/oder 5-Stellung durch Methyl, Chlor, Difluormethyl oder Trifluormethyl substituiert ist;

1-Methylpyrazol-4-yl, das gegebenenfalls in 3- und/oder 5-Stellung durch Methyl, Chlor, Difluormethyl oder Trifluormethyl substituiert ist; oder

Oxazol-5-yl, das gegebenenfalls in 2- und/oder 4-Stellung durch Methyl oder Chlor substituiert ist.

**5.** Mittel nach einem der vorhergehenden Ansprüche, das als Amidverbindung eine Verbindung der Formel II enthält, worin $R^2$ für eine Phenylgruppe steht, die gegebenenfalls substituiert ist durch den in Anspruch 1 genannten Substituenten.

**6.** Mittel nach Anspruch 5, wobei $R^2$ für eine Phenylgruppe steht, die in 2-Stellung durch den in Anspruch 1 genannten Substituenten substituiert ist.

**7.** Mittel nach einem der vorhergehenden Ansprüche, das als Amidverbindung eine Verbindung der Formel IIa enthält:

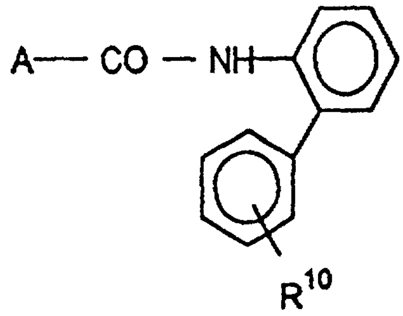

worin A für

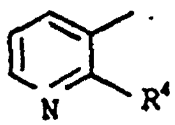

(A2)

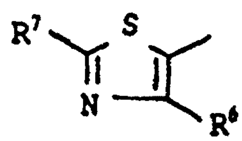

(A5)

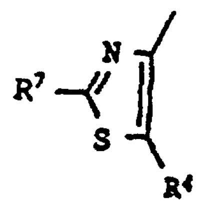

(A6)

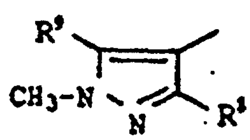

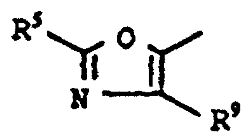

(A8)

steht;

- $R^4$ für Trifluormethyl oder Chlor steht,
- $R^6$ für Methyl, Difluormethyl, Trifluormethyl oder Chlor steht,
- $R^7$ für Wasserstoff, Methyl oder Chlor steht,
- $R^8$ für Methyl, Difluormethyl oder Trifluormethyl steht,
- $R^9$ für Wasserstoff, Methyl, Difluormethyl, Trifluormethyl oder Chlor steht,
- $R^{10}$ für $C_1$-$C_4$-Alkyl oder Halogen steht.

**8.** Mittel nach einem der Ansprüche 1 bis 7, das als Amidverbindung eine Verbindung der Formel IIb enthält

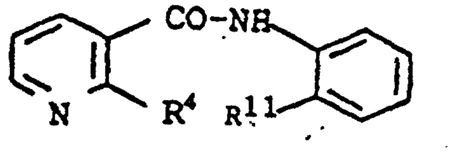

(IIb)

worin

$R^4$ für Halogen steht und
$R^{11}$ für Phenyl steht, das durch Halogen substituiert ist.

**9.** Mittel nach einem der Ansprüche 1 bis 8, das als Amidverbindung eine Verbindung der nachfolgenden Formeln enthält:

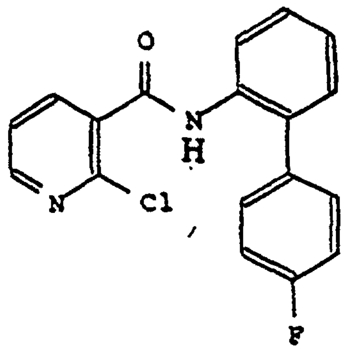

,

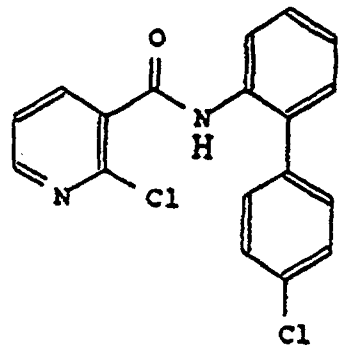

**10.** Mittel nach einem der vorhergehenden Ansprüche, das in zwei Teilen konditioniert ist, wobei der eine Teil den Wirkstoff der Formel I in einem festen oder flüssigen Träger enthält und der andere Teil die Amidverbindung der Formel II in einem festen oder flüssigen Träger enthält.

**11.** Verfahren zur Bekämpfung von Schadpilzen, dadurch gekennzeichnet, daß man die Pilze, deren Lebensraum oder die vor Pilzbefall zu schützenden Materialien, Pflanzen, Samen, Böden, Flächen oder Räume mit einem Mittel gemäß einem der Ansprüche 1 bis 10 behandelt, wobei die Anwendung der Wirkstoffe gleichzeitig, und zwar gemeinsam oder getrennt oder nacheinander erfolgen kann.

## Claims

**1.** A composition for controlling harmful fungi comprising, in a solid or liquid carrier,

A) at least one active ingredient, which inhibits respiration on cytochrome complex III, of the formula I

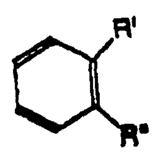

where

R' is $-C[CO_2CH_3]=CHOCH_3$, $-C[CO_2CH_3]=NOCH_3$, $-C[CONHCH_3]=NOCH_3$, $-C[CO_2CH_3]=CHCH_3$, $-C[CO_2CH_3]=CHCH_2CH_3$, $-C[COCH_3]=NOCH_3$, $-C[COCH_2CH_3]=NOCH_3$, $-N(OCH_3)-CO_2CH_3$, $-N(CH_3)-CO_2CH_3$ or $-N(CH_2CH_3)-CO_2CH_3$;
R" has one of the following meanings:

a) phenyloxymethylene, pyridinyloxymethylene, pyrimidinyloxymethylene or pyrazolyloxymethylene, the aromatic radical being unsubstituted or having 1, 2 or 3 substituents, independently of one another selected from amongst alkyl, halogen, $CF_3$, $CHF_2$, $-C(CH_3)=NOCH_3$, and phenyl which is unsubstituted or substituted by 1, 2 or 3 halogen atoms and/or alkyl groups;
b) phenoxy or pyrimidinyloxy, unsubstituted or substituted by 1, 2 or 3 halogen atoms or a phenoxy radical which is unsubstituted or has a halogen or cyano substituent;

c) $CH_2ON=CR^{\alpha}R^{\beta}$ where $R^{\alpha}$ is alkyl; and $R^{\beta}$ is phenyl which is unsubstituted or has 1, 2 or 3 substituents, independently of one another selected from amongst alkyl, halogen, $CF_3$ and $CHF_2$;
d) $CH_2ON=CR^{\gamma}CR^{\delta}=NOR^{\varepsilon}$
where $R^{\gamma}$ is alkyl;
$R^{\delta}$ is alkyl or phenyl which is unsubstituted or is substitued by 1, 2 or 3 halogen atoms; and
$R^{\varepsilon}$ is alkyl or alkenyl;

and

B) at least one amide compound of the formula II

$$A - CO - NR^1 - R^2$$

where

- A is pyridyl, thiazolyl, pyrazolyl or oxazolyl, it being possible for these groups to have 1, 2 or 3 substituents, independently of one another selected from amongst alkyl, halogen, difluoromethyl and trifluoromethyl;
- $R^1$ is a hydrogen atom, alkyl or alkoxy;
- $R^2$ is a phenyl or cycloalkyl group which is unsubstituted or has a phenyl substituent, it being possible for the phenyl substituent to have 1 to 5 halogen atoms and/or 1 to 3 alkyl substituents.

**2.** A composition as claimed in claim 1 where R' is $C[CO_2CH_3]=CHCH_3$ or $C[CONHCH_3]=NOCH_3$.

**3.** A composition as claimed in claim 1 which comprises, as active ingredient of the formula I, a compound of the following formulae:

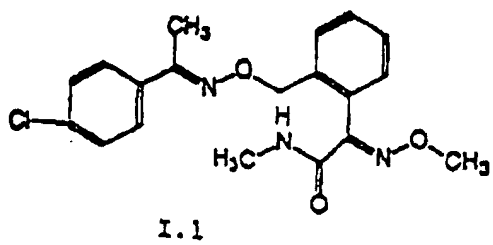

I.1

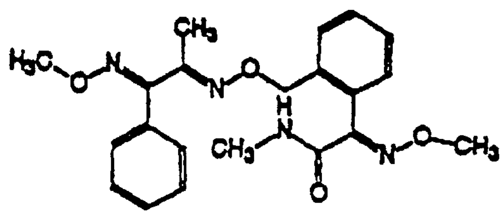

I.2

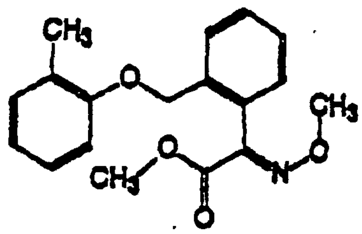

I.3

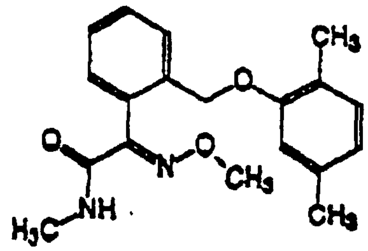

I.4

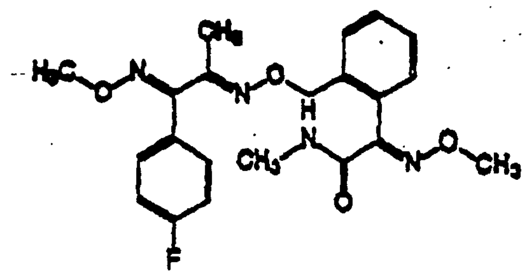

I.5

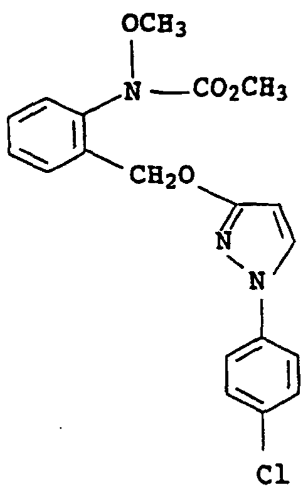

I.8 A-10

**4.** A composition as claimed in any of claims 1 to 3 which comprises, as the amide compound, a compound of the formula II where the radical A is one of the following groups:

pyridin-3-yl which is unsubstituted or substituted in the 2-position by halogen, methyl, difluoromethyl, trifluoromethyl, methoxy, methylthio, methylsulfinyl or methylsulfonyl;

thiazol-5-yl which is unsubstituted or substituted in the 2-and/or 4-position by methyl, chlorine, difluoromethyl or trifluoromethyl;

thiazol-4-yl which is unsubstituted or substituted in the 2-and/or 5-position by methyl, chlorine, difluoromethyl or trifluoromethyl;

1-methylpyrazol-4-yl which is unsubstituted or substituted in the 3- and/or 5-position by methyl, chlorine, difluoromethyl or trifluoromethyl; or

oxazol-5-yl which is unsubstituted or substituted in the 2-and/or 4-position by methyl or chlorine.

**5.** A composition as claimed in any one of the preceding claims which comprises, as the amide compound, a compound of the formula II where $R^2$ is a phenyl group which is unsubstituted or substituted by the substituents mentioned in claim 1.

**6.** A composition as claimed in claim 5 where $R^2$ is a phenyl group which is substituted in the 2-position by the substituents mentioned in claim 1.

**7.** A composition as claimed in any one of the preceding claims which comprises, as the amide compound, a compound of the formula IIa:

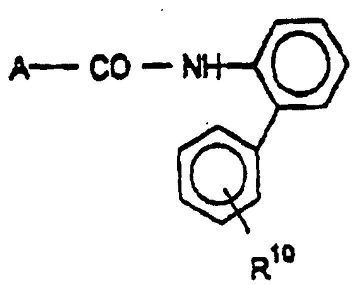

where A is

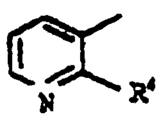

(A2)

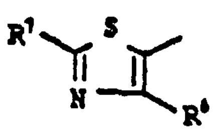

(A5)

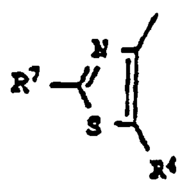

(A6)

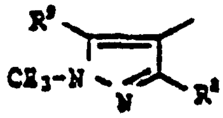

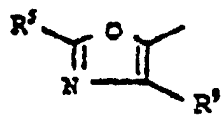

(A8)

$R^4$ is trifluoromethyl or chlorine,
$R^6$ is methyl, difluoromethyl, trifluoromethyl or chlorine,
$R^7$ is hydrogen, methyl or chlorine,
$R^8$ is methyl, difluoromethyl or trifluoromethyl,
$R^9$ is hydrogen, methyl, difluoromethyl, trifluoromethyl or chlorine, and
$R^{10}$ is $C_1$-$C_4$-alkyl or halogen.

**8.** A composition as claimed in any of claims 1 to 7 which comprises, as the amide compound, a compound of the formula IIb

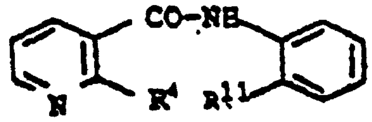 (IIb)

where

$R^4$ is halogen and

$R^{11}$ is phenyl which is substituted by halogen.

**9.** A composition as claimed in any of claims 1 to 8 which comprises, as the amide compound, a compound of the formulae below:

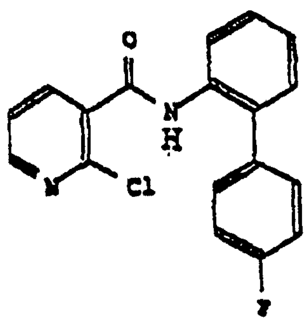

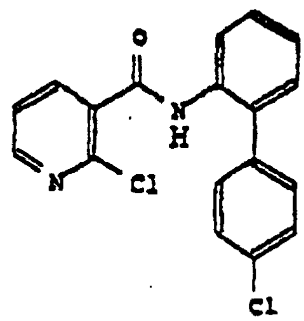

**10.** A composition as claimed in any one of the preceding claims which is conditioned in two parts, one part comprising the active ingredient of the formula I in a solid or liquid carrier and the other part comprising the amide compound of the formula II in a solid or liquid carrier.

**11.** A method of controlling harmful fungi, which comprises treating the fungi, their environment, or the materials, plants, seeds, soils, areas or spaces to be protected against fungal infection, with a composition as claimed in any of claims 1 to 10, it being possible to apply the active ingredients simultaneously, ie. jointly or separately, or in succession.

## Revendications

**1.** Produits pour lutter contre les champignons nuisibles, contenant dans un support solide ou liquide

A) au moins une substance active de formule I inhibant la respiration sur le complexe de cytochrome III

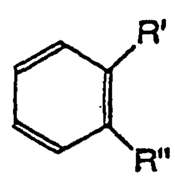

où

R' désigne $-C[CO_2CH_3]=CHOCH_3$, $-C[CO_2CH_3]=NOCH_3$, $-C[CONHCH_3]=NOCH_3$, $-C[CO_2CH_3]=CHCH_3$, $-C[CO_2CH_3]=CHCH_2CH_3$, $-C[COCH_3]=NOCH_3$, $-C[COCH_2CH_3]=NOCH_3$, $-N(OCH_3)-CO_2CH_3$, $-N(CH_3)-CO_2CH_3$ ou $-N(CH_2CH_3)-CO_2CH_3$;

R" possède l'une des significations suivantes:

a) phényloxyméthylène, pyridinyloxyméthylène, pyrimidinyloxyméthylène ou pyrazolyloxyméthylène, le reste aromatique présentant éventuellement 1, 2 ou 3 substituants, qui sont choisis indépendamment l'un de l'autre parmi les groupes alkyle, halogéno, $CF_3$, $CHF_2$, $-C(CH_3)=NOCH_3$, et phényle, qui est éventuellement substitué par 1, 2 ou 3 atomes d'halogène et/ou groupes alkyle;
b) phénoxy ou pyrimidinyloxy, qui est éventuellement substitué par 1, 2 ou 3 atomes d'halogène ou par un reste phénoxy, qui présente éventuellement un substituant halogéno ou cyano;
c) $CH_2ON=CR^\alpha R^\beta$,
tandis que $R^\alpha$ désigne un alkyle; et $R^\beta$ désigne un phényle, qui présente éventuellement 1, 2 ou 3 substituants, qui sont choisis indépendamment l'un de l'autre parmi les groupes alkyle, halogéno, $CF_3$ et $CHF_2$; d) $CH_2ON=CR^\gamma CR^\delta=NOR^\varepsilon$,
où $R^\gamma$ désigne un alkyle;
$R^\delta$ désigne un alkyle ou un phényle, qui est éventuellement substitué par 1, 2 ou 3 atomes d'halogène; et
$R^\varepsilon$ désigne un alkyle ou un alcényle;

et
B) au moins un composé d'amide de formule II

$$A - CO - NR^1 - R^2$$

où

- A représente un groupe pyridyle, thiazolyle, pyrazolyle ou oxazolyle, tandis que ces groupes peuvent présenter 1, 2 ou 3 substituants, qui sont choisis indépendamment l'un de l'autre parmi les groupes alkyle, halogéno, difluorométhyle et trifluorométhyle;
- $R^1$ représente un atome d'hydrogène, un alkyle ou un alcoxy;
- $R^2$ représente un groupe phényle ou cycloalkyle, qui présente éventuellement un substituant phényle, le substituant phényle pouvant présenter 1 à 5 atomes d'halogène et/ou 1 à 3 substituants alkyle.

**2.** Produit selon la revendication 1, dans lequel R' désigne $C[CO_2CH_3]=CHCH_3$ ou $C[CONHCH_3]=NOCH_3$.

**3.** Produit selon la revendication 1, qui contient comme substance active de formule I un composé ayant les formules suivantes:

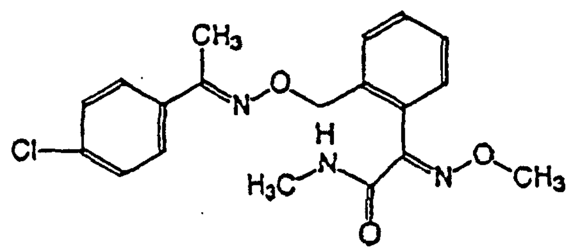

I.1

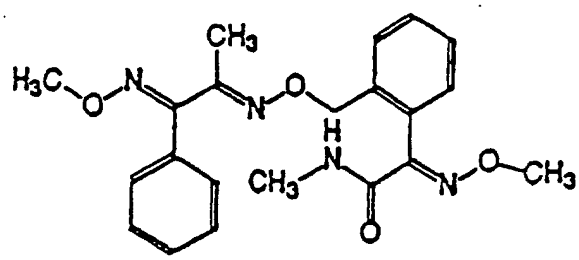

I.2

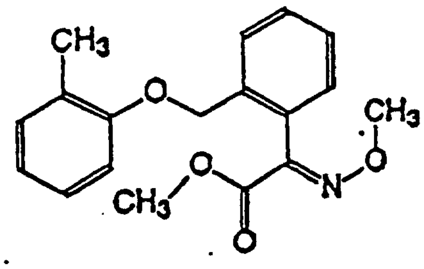

I.3

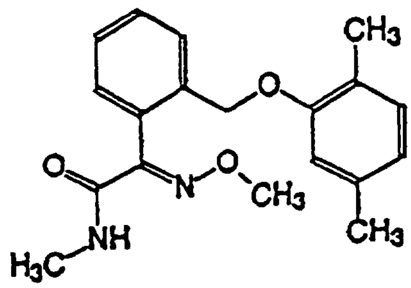

I.4

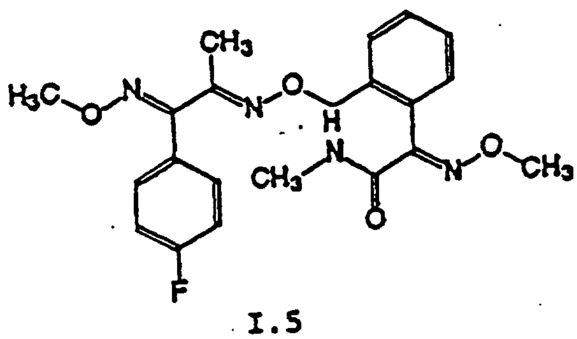

I.5

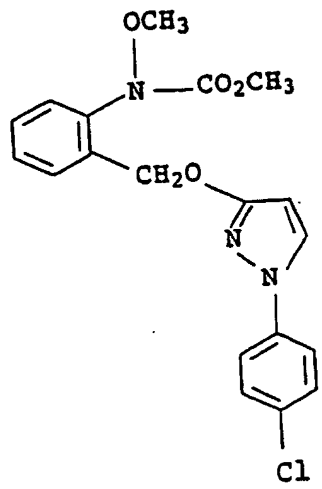

I.8 A-10

**4.** Produit selon l'une des revendications 1 à 3, qui contient comme composé d'amide un composé de formule II, dans lequel le reste A désigne l'un des groupes suivants:

pyridine-3-yle, qui est éventuellement substitué en position 2 par un groupe halogéno, méthyle, difluorométhyle, trifluorométhyle, méthoxy, méthylthio, méthylsylfinyle ou méthylsulfonyle;

thiazole-5-yle, qui est éventuellement substitué en position 2 et/ou 4 par un groupe méthyle, chloro, difluorométhyle ou trifluorométhyle;

thiazole-4-yle, qui est éventuellement substitué en position 2 et/ou 5 par un groupe méthyle, chloro, difluorométhyle ou trifluorométhyle;

1-méthylpyrazole-4-yle, qui est éventuellement substitué en position 3 et/ou 5 par un groupe méthyle, chloro, difluorométhyle ou trifluorométhyle; ou

oxazole-5-yle, qui est éventuellement substitué en position 2 et/ou 4 par un groupe méthyle ou chloro.

**5.** Produit selon l'une des revendications précédentes, qui contient comme composé d'amide un composé de formule II, où $R^2$ désigne un groupe phényle, qui est éventuellement substitué par les substituants indiqués dans la revendication 1.

**6.** Produit selon la revendication 5, dans lequel $R^2$ désigne un groupe phényle, qui est substitué en position 2 par les substituants indiqués dans la revendication 1.

**7.** Produit selon l'une des revendications précédentes, qui contient comme composé d'amide un composé de formule IIa

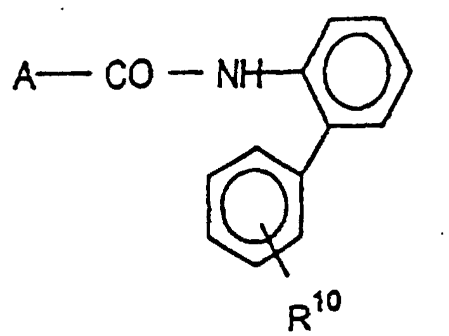

où A désigne

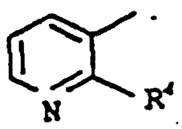

(A2)

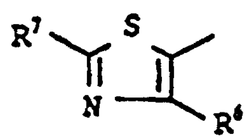

(A5)

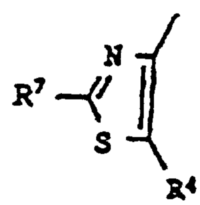

(A6)

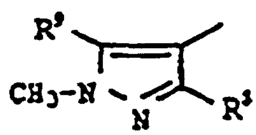

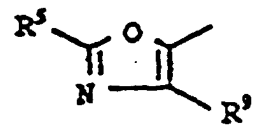

(A8)

$R^4$ désigne un groupe trifluorométhyle ou chloro,
$R^6$ représente un groupe méthyle, difluorométhyle, trifluorométhyle ou chloro,
$R^7$ désigne l'hydrogène ou un groupe méthyle ou chloro,
$R^8$ désigne un groupe méthyle, difluorométhyle ou trifluorométhyle,
$R^9$ représente l'hydrogène ou un groupe méthyle, difluorométhyle, trifluorométhyle ou chloro,
$R^{10}$ représente un groupe alkyle en $C_1$-$C_4$ ou halogéno.

**8.** Produit selon l'une des revendications 1 à 7, qui contient comme composé d'amide un composé de formule IIb

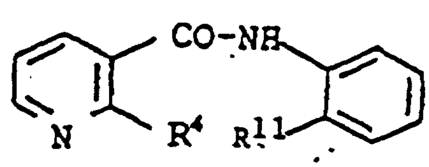

(IIb)

où

$R^4$ désigne un halogène et
$R^{11}$ désigne un groupe phényle, qui est substitué par un halogène.

**9.** Produit selon l'une des revendications 1 à 8, qui contient comme composé d'amide un composé ayant les formules suivantes:

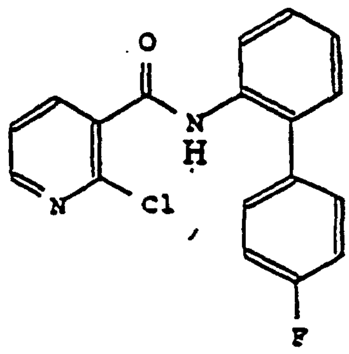

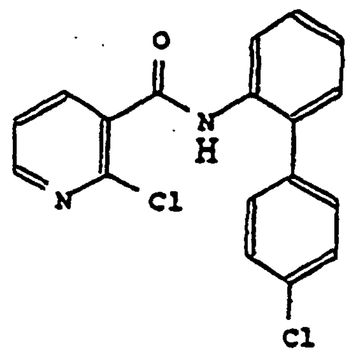

**10.** Produit selon l'une des revendications précédentes, qui est conditionné en deux parties, une partie contenant la substance active de formule I dans un support solide ou fluide, et l'autre partie contient le composé d'amide de formule II dans un support solide ou fluide.

**11.** Procédé pour lutter contre les champignons nuisibles, caractérisé par le fait qu'on traite les champignons, leur biotope ou les matières, plantes, semences, sols, surfaces ou espaces à protéger contre l'apparition de champignons avec un produit selon l'une des revendications 1 à 10, l'application des substances actives pouvant s'effectuer simultanément, et dans ce cas conjointement ou séparément, ou successivement